# EUROPÄISCHE PATENTSCHRIFT

(11) **EP 3 646 430 B1**
(45) Veröffentlichungstag und Bekanntmachung des Hinweises auf die Patenterteilung: **04.08.2021**
(21) Anmeldenummer: 18731448.9
(22) Anmeldetag: 14.06.2018
(51) Int. Cl.: H02J 3/38

(54) **VERFAHREN ZUM BETRIEB EINES INSELNETZES UND INSELNETZ**
METHOD FOR OPERATING AN ISLAND NETWORK, AND ISLAND NETWORK
PROCÉDÉ DE FONCTIONNEMENT D'UN RÉSEAU ISOLÉ ET RÉSEAU ISOLÉ

(30) Priorität: 28.06.2017 DE 102017114306
(43) Veröffentlichungstag der Anmeldung: 06.05.2020
(73) Patentinhaber: SMA Solar Technology AG, 34266 Niestetal (DE)
(72) Erfinder: FALK, Andreas, 34131 Kassel (DE); HARDT, Christian, 34128 Kassel (DE); BECHTEL, Neidhardt, 34130 Kassel (DE); HERMELING, Dirk, 32469 Petershagen (DE)
(86) Internationale Anmeldenummer: PCT/EP2018/065894
(87) Internationale Veröffentlichungsnummer: WO 2019/001986

(56) Entgegenhaltungen:
- DE-A1-102013 102 603
- DE-A1-102013 218 892
- DE-A1-102014 108 395

## Beschreibung

### TECHNISCHES GEBIET DER ERFINDUNG

Die Erfindung bezieht sich auf ein Verfahren zum Betrieb eines Inselnetzes und ein Inselnetz, das mit einem derartigen Verfahren betrieben wird. Insbesondere - aber nicht ausschließlich - handelt es sich dabei um ein Inselnetz, bei dem elektrische Leistung eines regenerativen Energieerzeugers einem Elektrolyseur als Energie-Langzeitspeicher und Last in dem Inselnetz zugeführt wird.

### STAND DER TECHNIK

Bei Inselnetzen sind Energieerzeuger über eine oder mehrere AC-Leitungen zum Transport der Leistung mit einem oder mehreren Energieverbrauchern verbunden. Da das Inselnetz nur sehr begrenzte Möglichkeiten einer Leistungsspeicherung aufweist, ist zu jeder Zeit eine ausgeglichene Bilanz von durch die Energieerzeuger erzeugter Leistung einerseits und von den Energieverbrauchern verbrauchter Leistung andererseits einzuhalten. Eine Frequenz einer Wechselspannung in dem Inselnetz signalisiert dabei, ob die Bilanz tendiert, sich zugunsten eines Leistungsverbrauches (Frequenz unterhalb der Nominalfrequenz) oder zugunsten einer Leistungserzeugung (Frequenz oberhalb der Nominalfrequenz) zu verschieben. Die Frequenz dient als Maß dafür, in welche Richtung - Leistungserzeugung oder Leistungsverbrauch - die Leistungsbilanz verschoben werden muss, um der tendenziellen Bilanzverschiebung entgegen zu wirken. Dabei wird bei herkömmlichen Inselnetzen üblicherweise eine Leistungserzeugung abhängig von einem jeweiligen Leistungsverbrauch geregelt, d. h. der Leistungsverbrauch definiert die Leistungserzeugung.

In manchen Inselnetzen ist es jedoch wünschenswert, nicht die Leistungserzeugung abhängig vom Leistungsverbrauch zu regeln, sondern umgekehrt, den Leistungsverbrauch in Abhängigkeit einer aktuell maximal verfügbaren Leistungserzeugung zu regeln. Dies ist insbesondere dann der Fall, wenn das Inselnetz einen regenerativen Energieerzeuger beinhaltet, dessen erzeugte Leistung einem Langzeitspeicher, beispielsweise einem Elektrolyseur als Last zugeführt werden soll. Hier ist das Ziel, den oder die Energieerzeuger möglichst stets bei der jeweilig zur Verfügung stehender Leistung zu betreiben, um ein Maximum dieser Leistung in einem geeigneten Energieträger (hier: Wasserstoff) zu speichern.

Aus dem Stand der Technik sind Inselnetze mit einer regenerativem Energieerzeuger und einem Elektrolyseur als Last bekannt. Jedoch beinhalten diese zum Zweck einer Erzeugung der Wechselspannung in dem Inselnetz neben dem als Last operierenden Langzeit-Energiespeicher meist einen kurzzeitig in seinem Arbeitspunkt variierbaren Energiespeicher, beispielsweise eine Batterie. Dieser kurzzeitig variierbare Energiespeicher, fortan schlicht als Energiespeicher bezeichnet, ist über einen bidirektional betreibbaren Umrichter an eine AC-Leitung des Inselnetzes angeschlossen. Er hat die Aufgabe, einerseits eine Wechselspannung mit konstanter Spannungsamplitude in dem Inselnetz zu stellen, und andererseits den Leistungsfluss zu der Last bei einer gegebenenfalls fluktuierenden Leistungserzeugung des regenerativen Energieerzeugers durch Laden oder Entladen zu vergleichmäßigen. Hierzu ist der dem Energiespeicher zugeordnete Umrichter spannungsstellend und bidirektional ausgebildet. Ebenfalls sind Inselnetze bekannt, bei denen statt dem Energiespeicher ein Dieselgenerator vorgesehen wird, der die Aufgabe des Energiespeichers übernimmt und einerseits eine Wechselspannung mit konstanter Spannungsamplitude und andererseits den Leistungsfluss zu der Last durch entsprechende Änderung einer Primärenergiezufuhr (hier Kraftstoff) vergleichmäßigt.

In einem herkömmlichen Inselnetz ist somit stets ein Energiespeicher und/oder ein Dieselgenerator als Netzbildner und Puffer einer gegebenenfalls stark fluktuierenden Leistung des regenerativen Energieerzeugers vorzuhalten. Dieser zieht nicht nur eine beträchtliche Investition in der Anschaffung, sondern zusätzlich auch Kosten beim Betrieb (z.B. Kraftstoffkosten) nach sich. Des Weiteren ist eine zusätzliche gegebenenfalls wartungsanfällige Komponente erforderlich, wodurch der Betrieb des Inselnetzes aufwändig gestaltet wird.

Aus der DE 10140783 A1 ist eine Vorrichtung zum gleichberechtigten Parallelbetrieb von wenigstens zwei induktiv gekoppelten Wechselrichtern unter Berücksichtigung einer vorgewählten Frequenzstatik und einer vorgewählten Spannungsstatik bekannt.

Die Schrift CA 2950809 A1 offenbart ein Verfahren zur automatischen Kennlinien-Steuerung von Wechselrichtern eines Inselnetzes. Bei dem Verfahren werden Steigungen einer Frequenz-Leistungs (f-P) - Kennlinie und einer Spannungs-Blindleistungs (U-Q) - Kennlinie der Wechselrichter aktiv variiert, um auch bei einer Laständerung eine Frequenz und eine Spannung der Wechselspannung in dem Inselnetz abweichungsfrei aufrechtzuerhalten. Das Verfahren nutzt eine Kleinsignal-Stabilitätsanalyse zur Verifikation einer Umsetzbarkeit der aktiv geänderten Kennlinien.

Die EP 2940826 A1 offenbart einen Leistungswandler, dessen Steuerverfahren nicht geändert werden muss, wenn ein Betrieb eines Inselnetzes, an das der Leistungswandler zusammen mit anderen Erzeugungseinheiten angeschlossen ist, von einem spannungsstellenden in einen stromstellenden Betrieb geändert wird.

Die EP 3185386 A1 offenbart ein Verfahren zur Steuerung eines Inselnetzes mit einer erneuerbaren Erzeugungseinheit und einem Synchrongenerator. Die erneuerbare Erzeugungseinheit ist ausgelegt, eine erste Leistung kennliniengesteuert an das Inselnetz zu übertragen und kann parallel mit einem Synchrongenerator, der eine zweite Leistung an das Inselnetz überträgt, betrieben werden. Der Synchrongenerator wird gestartet, wenn eine Frequenz des Inselnetzes unterhalb eines Frequenzschwellwertes und/oder eine Spannung des Inselnetzes unterhalb eines Spannungsschwellwertes liegen. Der Synchrongenerator wird gestoppt, wenn die zweite Leistung unterhalb eines Leistungsschwellwertes liegt.

Die Schrift DE 10 2013 218892 A1 beschreibt ein Verfahren zur Steuerung einer oder mehrerer regenerativer Energieerzeugungsanlagen in einem elektrischen Stromnetz mit einer Mehrzahl von miteinander verbundenen Netzknoten. Die Netzknoten können elektrische Energie in das Stromnetz einspeisen und aus dem Stromnetz entnehmen. Die regenerativen Energieerzeugungsanlagen sind Netzknoten zur Einspeisung von elektrischer Energie zugeordnet und umfassen jeweils einen Energiespeicher zur Zwischenspeicherung von Energie. Die Energieerzeugungsanlagen werden in dem Stromnetz als Spannungsquelle betrieben. Dabei wird die Wechselspannung an der Energieerzeugungsanlage derart geregelt, dass die Energiemenge im Energiespeicher oberhalb eines Maximalleistungs-Energiewerts bleibt, bei dem die maximale elektrische Wirkleistung Pₘ durch die jeweilige regenerative Energieerzeugungsanlage erzeugt wird. Hierdurch wird ein stabiler Betrieb des Stromnetzes ohne Netzausfälle gewährleistet.

Die Schrift DE 10 2013 102603 A1 offenbart ein Verfahren für einen Schwarzstart eines Kraftwerks mit mehreren einem lokalen Wechselstromnetz zuschaltbaren Wechselrichtern. Dabei wird mit einem ersten Wechselrichter eine erste Wechselspannung in dem Wechselstromnetz aufgebaut, die gegenüber einer Nennspannung des Wechselstromnetzes reduziert ist. Ein zweiter Wechselrichter wird dem Wechselstromnetz nach Synchronisation mit der ersten Wechselspannung zugeschaltet, wonach eine gegenüber der ersten Wechselspannung erhöhte zweite Wechselspannung in dem Wechselstromnetz aufgebaut wird.

Die Schrift DE 10 2014 108395 A1 beschreibt ein Verfahren zum Betrieb einer Energieerzeugungsanlage, die eine elektrische Leistung in ein Wechselspannungsnetz einspeist. Die einzuspeisende Leistung wird anhand einer eine Sollfrequenz umfassenden Kennlinie abhängig von einer momentanen Netzfrequenz des Wechselspannungsnetzes eingestellt. Dabei wird aus einem Zeitverlauf der Wechselspannung des Wechselspannungsnetzes eine lokale Netzzeit ermittelt und ein Parameter der Kennlinie in Abhängigkeit einer Abweichung zwischen der lokalen Netzzeit und einer empfangenen globalen Zeitinformation geändert. Auf diese Weise kann einer Zunahme der Abweichung zwischen der lokalen Netzzeit und der empfangenen globalen Zeitinformation entgegengewirkt werden.

### AUFGABE DER ERFINDUNG

Der Erfindung liegt die Aufgabe zugrunde, ein Verfahren zum Betrieb eines Inselnetzes mit einer Last und zumindest einem spannungsstellenden Umrichter, an dessen Eingang eine regenerative Energiequelle angeschlossen ist, aufzuzeigen, wobei der Leistungsverbrauch der Last so gesteuert wird, dass ein den spannungsstellenden Umrichter und die an diesen angeschlossene regenerative Energiequelle umfassender Energieerzeuger möglichst bei maximal verfügbarer Leistung betrieben wird. Dabei soll das Verfahren geeignet sein, das Inselnetz auch ohne einen Netzbildner in Form eines bidirektional betreibbaren Energiespeichers oder eines Dieselgenerators zu betreiben. Es ist weiterhin Aufgabe der Erfindung, ein Inselnetz mit einem derartigen Verfahren aufzuzeigen.

### LÖSUNG

Die Aufgabe der Erfindung wird durch ein Verfahren zum Betrieb eines Inselnetzes mit den Merkmalen des unabhängigen Patentanspruchs 1 gelöst. Die abhängigen Patentansprüche 2 bis 9 sind auf bevorzugte Ausführungsformen des Verfahrens gerichtet. Der unabhängige Patentanspruch 10 zielt auf ein Inselnetz mit einem derartigen Verfahren. Die abhängigen Patentansprüche 11 bis 14 sind auf vorteilhafte Ausführungsformen des Inselnetzes gerichtet.

### BESCHREIBUNG DER ERFINDUNG

Bei einem erfindungsgemäßen Verfahren zum Betreiben eines Inselnetzes umfasst das Inselnetz
- mindestens einen spannungsstellenden Umrichter, der zur Umwandlung von Leistung einer angeschlossenen regenerativen Energiequelle in AC-Leistung entsprechend einer Frequenz-Leistungs-Kennlinie eingerichtet ist,
- eine Last, deren Leistungsverbrauch von einer Spannungsamplitude Û₀ einer Wechselspannung des Inselnetzes abhängt, wobei die Spannungsamplitude Û₀ in dem Inselnetz variierbar ist und die variable Spannungsamplitude Û₀ zur Anpassung einer von der Last verbrauchten Leistung P_{Last} genutzt wird, und
- eine Steuereinheit, die dem mindestens einen spannungsstellenden Umrichter einen Vorgabewert der Spannungsamplitude Û₀ übermittelt. Dabei umfasst das Verfahren die folgenden Schritte zur Anpassung der von der Last zu verbrauchenden Leistung P_{Last}, wobei die Schritte wiederholt durchlaufen werden, um eine zeitliche Änderung einer maximal verfügbaren Leistung der regenerativen Energiequelle (3a, 3b) zu verfolgen:
- Verändern der Frequenz-Leistungs-Kennlinie des mindestens einen Umrichters in Abhängigkeit einer verfügbaren Leistung der regenerativen Energiequelle,
- wobei die Frequenz-Leistungs-Kennlinie zumindest abschnittsweise zu einer höheren Frequenz bei gegebener Leistung geändert wird, um zu überprüfen, ob die verfügbare Leistung der regenerativen Energiequelle über der aktuellen Leistung liegt, und
- wobei die Frequenz-Leistungs-Kennlinie zumindest abschnittsweise zu einer niedrigeren Frequenz bei gegebener Leistung geändert wird, wenn die regenerative Energiequelle die gemäß der Frequenz-Leistungs-Kennlinie der aktuellen Frequenz zugeordnete Leistung nicht erbringen kann,
- Bestimmen einer Frequenz f₂ der Wechselspannung in dem Inselnetz durch eine mit der Steuereinheit verbundene Detektionseinheit als Folge der Veränderung der Frequenz-Leistungs-Kennlinie durch die Steuereinheit, gegebenenfalls in Verbindung mit einer Detektionseinheit, und
- Neubestimmen eines Vorgabewerts der Spannungsamplitude Û₀ und Übermittlung des neubestimmten Vorgabewertes an den mindestens einen spannungsstellenden Umrichter durch die Steuereinheit, wobei der Vorgabewert erhöht wird, um den Leistungsverbrauch der Last zu erhöhen, wenn die bestimmte Frequenz f₂ über einer Nominalfrequenz fₙₒₘ des Inselnetzes liegt, und der Vorgabewert erniedrigt wird, um den Leistungsverbrauch der Last zu verringern, wenn die bestimmte Frequenz f₂ unter der Nominalfrequenz fₙₒₘ des Inselnetzes liegt.

Die Last kann durch eine ohmsche Last mit einer linearen Strom-Spanungs-Kennlinie gebildet sein. Alternativ dazu kann die Last jedoch auch - wie beispielsweise im Falle eines Elektrolyseurs - eine nicht-lineare Strom-Spannungs-Kennlinie aufweisen. Die Steuereinheit kann in Form einer einzelnen separaten Steuereinheit vorliegen. Alternativ dazu kann sie jedoch auch auf mehrere Steuereinheiten verteilt sein. Die einzelne oder die mehreren Steuereinheiten können dabei ausschließlich für die Durchführung des erfindungsgemäßen Verfahrens vorgesehen sein. Es liegt jedoch im Rahmen der Erfindung, dass die Steuereinheit auch andere Steuerungsaufgaben, beispielsweise Aufgaben im Rahmen einer Betriebssteuerung eines Umrichters, übernehmen kann. Konkret kann die Steuereinheit auch auf mehrere Umrichter verteilt vorliegen, und dort insbesondere jeweils als Teil der Steuerung der einzelnen Umrichter ausgebildet sein. Für diesen Fall kann die Steuerung eines bestimmten Umrichters als Master und die der anderen Umrichter als Slave operieren. Das Verändern der Frequenz-Leistungs-Kennlinie kann bei mehreren spannungsstellenden Umrichtern durch die Steuereinheit koordiniert werden. Alternativ kann es jedoch auch ohne Koordination der einzelnen Umrichter untereinander, quasi autark in jedem einzelnen Umrichter, ablaufen.

Im Gegensatz zu einem öffentlichen Energieverteilungsnetz ist in dem Inselnetz die Spannungsamplitude Üo der Wechselspannung nicht konstant, sondern durch die Steuereinheit variierbar. Die variable Spannungsamplitude Üo wird im Rahmen des Verfahrens gerade zur Anpassung einer von der Last verbrauchten Leistung P_{Last} genutzt. Jeder der an das Inselnetz angeschlossenen spannungsstellenden Umrichter in Verbindung mit der eingangsseitig angeschlossenen Energiequelle überprüft, ob er mehr als eine aktuell erzeugte Leistung liefern kann. Hierzu wird zunächst seine Frequenz-Leistungs-Kennlinie zumindest abschnittsweise zu einer höheren Frequenz bei gleicher Leistung verschoben. Im Falle mehrerer Umrichter verschieben sich hierdurch Arbeitspunkte aller Umrichter untereinander so, dass der Umrichter, dessen Frequenz-Leistung-Kennlinie zu einer höheren Frequenz verschoben wurde, sofern dessen Energiequelle über eine höhere Leistung verfügt, eine höhere Leistung liefert, während die anderen Umrichter entsprechend ihrer Frequenz-Leistungs-Kennlinie etwas weniger Leistung beitragen. Es ergibt sich eine zunächst noch unveränderte Gesamtleistung, jedoch mit anderen Teilleistungen der einzelnen Umrichter. Allerdings wird die Gesamtleistung nun bei einer höheren Frequenz in dem Inselnetz transportiert. Die höhere Frequenz wird über die Steuereinheit, gegebenenfalls mithilfe einer Detektionseinheit gemessen und als Signal interpretiert, dass mehr Leistung an die Last transportiert werden kann. Um den Leistungsverbrauch der Last zu erhöhen, wird den Umrichtern durch die Steuereinheit ein neuer Vorgabewert der Spannungsamplitude Û₀ übermittelt. Indem die Umrichter nun eine Wechselspannung mit einer höheren Spannungsamplitude Û₀ stellen, vergrößert sich die von der Last verbrauchte Leistung. Kann der Umrichter in Verbindung mit der angeschlossenen Energiequelle die gemäß ihrer Frequenz-Leistungs-Kennlinie nicht stabil erbringen, so wird dies, beispielsweise durch Leistungsmessungen am Eingang und am Ausgang des Umrichters, oder durch eine Detektion einer Spannung über einem dem Umrichter zugeordneten Gleichspannungszwischenkreis erkannt. In Reaktion darauf wird die Frequenz-Leistungs-Kennlinie des betreffenden Umrichters zumindest abschnittsweise zu einer geringeren Frequenz bei gleicher Leistung verschoben. Hierdurch verringert sich auch die über den Umrichter fließende Leistung, während die anderen Umrichter eine etwas höhere Leistung liefern, so, dass zunächst eine unveränderte Gesamtleistung aber mit unterschiedlichen Teilleistungen der einzelnen Umrichter geliefert wird. Die Gesamtleistung wird jedoch mit einer geringeren Frequenz in dem Inselnetz transportiert. Ähnlich wie schon vorher wird nun die geringere Frequenz von der Steuereinheit detektiert und als Signal zur Verringerung der von der Last verbrauchten Leistung interpretiert. Entsprechend wird daher ein geringerer Vorgabewert der Spannungsamplitude Üo an die Gruppe der spannungsstellenden Umrichter übermittelt. Das oben am Beispiel mehrerer an das Inselnetz angeschlossener spannungsstellender Umrichter erklärte Verfahren kann auch auf einen einzelnen an das Inselnetz angeschlossenen spannungsstellenden Umrichter übertragen werden. Als Unterschied ergibt sich lediglich, dass bei einem Einzelnen an das Inselnetz angeschlossenen spannungsstellenden Umrichter mit dem Verändern der Frequenz-Leistung-Kennlinie nicht unmittelbar eine Veränderung der über den Umrichter fließenden Leistung einhergeht. Vielmehr ändert diese sich erst, wenn die Steuereinheit aufgrund einer sich durch die Kennlinienveränderung unmittelbar ergebenden Frequenzänderung dem einzelnen Umrichter einen neuen Vorgabewert für die Spannungsamplitude Û₀ übermittelt.

Das Verfahren nutzt innerhalb des Inselnetzes eine AC Kopplung zwischen dem zumindest einen Energieerzeuger und der Last. Eine AC-Übertragungsstrecke ist - insbesondere unter Berücksichtigung der Entfernung zwischen den Energiequellen und der Last - im Allgemeinen deutlich preisgünstiger als eine entsprechend auszulegende DC-Übertragungsstrecke. In vielen Fällen kann sogar eine ohnehin vorhandene AC-Übertragungsstrecke im Rahmen des Verfahrens genutzt werden. Indem nun erfindungsgemäß die regenerativen Energiequellen im Verbindung mit den Umrichtern als Netzbildner operieren, kann auf das Vorhalten von Energiespeichern oder Dieselgeneratoren als Netzbildner verzichtet werden. Hierdurch lässt sich der Aufwand sowohl in der Anschaffung wie auch dem Betrieb des Inselnetzes minimieren.

In einer vorteilhaften Ausführungsform des Verfahrens wird vor der Erhöhung des Vorgabewertes der Spannungsamplitude Û₀ überprüft, ob die über den zumindest einen Umrichter fließende Leistung P_{a,} P_{b} eine Leistungsgrenze P_{max,a}, P_{max,b} des entsprechenden Umrichters (9a, 9b) überschreitet oder zu überschreiten droht. Alternativ oder kumulativ wird überprüft, ob ein Verbrauch P_{Last} der Last einen maximal zulässigen Verbrauch P_{max,Last} der Last überschreitet oder zu überschreiten droht. Nach der/den Überprüfungen erfolgt eine Erhöhung des Vorgabewertes der Spannungsamplitude Û₀ nur dann, wenn die Überprüfung signalisiert, dass auch mit erhöhtem Vorgabewert der Spannungsamplitude Û₀ ein Überschreiten der Leistungsgrenze P_{max,a}, P_{max,b} des entsprechenden Umrichters bzw. des maximal zulässigen Verbrauchs P_{max,Last} der Last ausgeschlossen ist. Hierdurch lässt sich eine Übersteuerung des zumindest einen Umrichters und/oder der Last im Vorfeld vermeiden.

In einer Ausführungsform erfolgt eine Überprüfung, ob die regenerative Energiequelle die gemäß der Frequenz-Leistungs-Kennlinie der aktuellen Frequenz zugeordnete Leistung erbringen kann, derart, dass ein Spannungswert an einem dem entsprechenden Umrichter zugeordneten Gleichspannungs-Zwischenkreis gemessen wird. Auf diese Weise kann eine ohnehin am Gleichspannungszwischenkreis vorhandene Spannungsmessung für diesen Zweck genutzt werden. In diesem Fall wird dann, wenn der gemessene Spannungswert einen Spannungsschwellwert unterschreitet, durch die Unterschreitung signalisiert, dass die regenerative Energiequelle die gemäß der Frequenz-Leistungs-Kennlinie der aktuellen Frequenz zugeordnete Leistung nicht erbringen kann. Eine Nichterbringung einer der Frequenz-Leistungs-Kennlinie der aktuellen Frequenz zugeordneten Leistung muss jedoch nicht zwingend dadurch erfolgen, dass die Energiequelle nicht über diese Leistung verfügt. Vielmehr ist es auch möglich, dass der Verbund aus Energiequelle und Umrichter aufgrund eines Erreichen der Leistungsgrenze P_{max,a}, P_{max,b} des entsprechenden Umrichters die geforderte Leistung nicht erbringen kann. Dabei kann die Leistungsgrenze P_{max,a}, P_{max,b} des entsprechenden Umrichters aufgrund von - gegebenenfalls temperaturabhängigen - maximal erlaubten Strom- und/oder Spannungswerten des Umrichters ermittelt werden. In einer Ausführungsform des Verfahrens sind Werte der Leistungsgrenze P_{max,a}, P_{max,b} des Umrichters, der dem Umrichter zugeordneten regenerativen Energiequelle und/oder des maximal zulässigen Verbrauchs P_{max,Last} der Last zumindest näherungsweise bekannt. In diesem Fall kann die Anpassung der von der Last zu verbrauchenden Leistung derart erfolgen, dass die über den zumindest einen Umrichter fließende Leistung Pₐ, P_{b} um mindestens einen vorgegebenen Toleranzwert unterhalb der Leistungsgrenze P_{max,a}, P_{max,b} des entsprechenden Umrichters und/oder der dem Umrichter zugeordneten regenerativen Energiequelle liegt. Alternativ oder kumulativ dazu kann die Anpassung der von der Last zu verbrauchenden Leistung derart erfolgen, dass ein Verbrauch P_{Last} der Last um mindestens einen vorgegebenen Toleranzwert unterhalb des maximal zulässigen Verbrauchs P_{max,Last} der Last liegt. Auf diese Weise kann stets eine gewisse positive Regelreserve von den Energieerzeugern aus Umrichter und Energiequelle vorgehalten werden. Hierdurch kann ausgeschlossen werden, dass ein Energieerzeuger aufgrund einer Veränderung der Frequenz-Leistung-Kennlinie eines anderen Umrichters in einen Zustand manövriert wird, bei dem der Energieerzeuger die erforderliche Leistung nicht erbringen kann. Das Verfahren wird hierdurch besonders robust.

in einer Ausführungsform des Verfahrens weist die Veränderung der Frequenz-Leistungs-Kennlinie eine Parallelverschiebung zumindest eines Abschnittes der Frequenz-Leistungs-Kennlinie in Richtung der Frequenz-Achse auf. Dabei kann die Frequenz-Leistungs-Kennlinie prinzipiell durch eine beliebige - vorteilhafterweise monotone - Funktion gebildet werden. Es liegt im Rahmen der Erfindung, dass die Frequenz-Leistungs-Kennlinie zumindest in einem Abschnitt durch eine Gerade beschrieben wird. In diesem Fall kann die Veränderung der Frequenz-Leistungs-Kennlinie eine Änderung der Geradensteigung in dem betreffenden Abschnitt aufweisen.

In einer Ausführungsform des Verfahrens beinhaltet der mindestens eine spannungsstellende Umrichter nicht nur einen, sondern eine Gruppe mit einer Mehrzahl von spannungsstellenden Umrichtern, die jeweils zur Umwandlung von Leistung angeschlossener regenerativer Energiequellen in AC-Leistung entsprechend einer Frequenz-Leistung-Kennlinie eingerichtet sind, wobei das Verändern der Frequenz-Leistungs-Kennlinie in Abhängigkeit der verfügbaren Leistung der dem Umrichter zugeordneten Energiequelle für jeden einzelnen der Umrichter erfolgt. Dabei kann das Verändern der Frequenz-Leistungs-Kennlinie - zum Beispiel durch die Steuereinheit - in koordinierter Art und Weise bei den mehreren Umrichtern innerhalb der Gruppe erfolgen. Dies ist jedoch nicht zwingend, und kann auch unkoordiniert untereinander, quasi autark innerhalb jedes einzelnen Umrichters, erfolgen. Hierdurch können die Aufgaben der Steuereinheit minimiert werden, wodurch diese preisgünstiger wird.

In einem offenbarungsgemäßen Verfahren werden die Schritte zur Anpassung der von der Last zu verbrauchenden Leistung P_{Last} wiederholt durchlaufen, um eine Leistungsgrenze P_{max,a}, P_{max,b} des entsprechenden Umrichters zeitlich zu verfolgen.

Ein erfindungsgemäßes Inselnetz umfasst
- zumindest einen einen DC/AC-Wandler aufweisenden spannungsstellenden Umrichter, dessen Eingang an eine regenerative Energiequelle und dessen Ausgang an eine AC-Leitung des Inselnetzes angeschlossen ist. Dabei ist der Umrichter ausgelegt, eine Wechselspannung in dem Inselnetz in Abhängigkeit einer dem Umrichter zugeordneten Frequenz-Leistungs-Kennlinie zu stellen. Das Inselnetz umfasst weiterhin
- eine Last, deren Leistungsverbrauch von einer Spannungsamplitude Û₀ der Wechselspannung in dem Inselnetz abhängig ist,
- eine Steuereinheit zur Steuerung des zumindest einen spannungsstellenden Umrichters, die ausgelegt ist, dem zumindest einen spannungsstellenden Umrichter (9a, 9b) einen Vorgabewert der Spannungsamplitude Û₀ für die Wechselspannung des Inselnetzes zu übermitteln, und
- eine mit der Steuereinheit verbundene Detektionseinheit zur Bestimmung einer Frequenz f₂ der Wechselspannung in dem Inselnetz. Dabei ist die Steuereinheit in Verbindung mit dem zumindest einen Umrichter und der an den Umrichter angeschlossenen regenerativen Energiequelle ausgelegt, die folgenden Verfahrensschritte in wiederholter Art und Weise zu durchlaufen, um eine zeitliche Änderung einer maximal verfügbaren Leistung der regenerativen Energiequelle (3a, 3b) zu verfolgen:
- Verändern der Frequenz-Leistungs-Kennlinie (20a, 20b) des mindestens einen Umrichters (9a, 9b) in Abhängigkeit einer verfügbaren Leistung der regenerativen Energiequelle (3a, 3b),
- wobei die Frequenz-Leistungs-Kennlinie (20a 20b) zumindest abschnittsweise zu einer höheren Frequenz bei gegebener Leistung geändert wird, um zu überprüfen, ob die verfügbare Leistung der regenerativen Energiequelle (3a, 3b) über der aktuellen Leistung liegt, und
- wobei die Frequenz-Leistungs-Kennlinie (20a, 20b) zumindest abschnittsweise zu niedrigerer Frequenz bei gegebener Leistung geändert wird, wenn die regenerative Energiequelle (3a, 3b) die gemäß der Frequenz-Leistungs-Kennlinie (20a, 20b) der aktuellen Frequenz zugeordnete Leistung nicht erbringen kann,
- Bestimmen einer Frequenz f₂ der Wechselspannung in dem Inselnetz (1) durch die mit der Steuereinheit (11) verbundene Detektionseinheit (18) als Folge der Veränderung der Frequenz-Leistungs-Kennlinie (20a, 20b) durch die Steuereinheit (11), und
- Neubestimmen eines Vorgabewerts der Spannungsamplitude Û₀ und Übermittlung des neubestimmten Vorgabewertes an den mindestens einen spannungsstellenden Umrichter (9a, 9b) durch die Steuereinheit (11), wobei der Vorgabewert erhöht wird, um den Leistungsverbrauch der Last (6) zu erhöhen, wenn die bestimmte Frequenz f₂ über einer Nominalfrequenz fₙₒₘ liegt, und wobei der Vorgabewert erniedrigt wird, um den Leistungsverbrauch der Last (6) zu verringern, wenn die bestimmte Frequenz f₂ unter der Nominalfrequenz fₙₒₘ liegt.

Es ergeben sich die bereits im Zusammenhang mit dem Verfahren erläuterten Vorteile.

In einer Ausführungsform des Inselnetzes umfasst der zumindest eine spannungsstellende Umrichter (9a, 9b) eine Gruppe mit mehreren spannungsstellenden Umrichtern (9a, 9b). Dabei ist zumindest ein Umrichter der Gruppe in Verbindung mit der an den Umrichter angeschlossenen regenerativen Energiequelle als eine Photovoltaik (PV) - Anlage, oder als eine Windkraft - Anlage ausgebildet. Prinzipiell können die Umrichter jedoch auch mit anderen regenerativen Energiequellen verbunden werden. So kann die Verbindung des Umrichters mit der Energiequelle auch eine Wasserkraftanlage oder eine Gezeitenkraftanlage ausbilden.

In einer vorteilhaften Ausführungsform weist das Inselnetz eine Hochspannungs-Übertragungsstrecke mit einer Hochspannungsleitung auf, die über einen Transformator an die AC-Leitung des Inselnetzes angeschlossen ist. Vorteilhafterweise ist die Hochspannungs-Übertragungsstrecke an jedem ihrer zwei Enden über einen Transformator an die AC-Leitung des Inselnetzes angeschlossen, so dass sie die Gruppe der spannungsstellenden Umrichter inklusive der daran angeschlossenen regenerativen Energiequellen mit der Last verbindet. Durch die Hochspannungs-Übertragungsstrecke lässt sich eine gegebene elektrische Leistung durch geringeren Materialaufwand an Verkabelung transportieren. Die zusätzlich erforderlichen Transformatoren werden ab einer gewissen Entfernung zwischen Energieerzeuger und Last durch den geringeren Materialaufwand bei der Verkabelung überkompensiert und dadurch amortisiert.

Die Last in dem Inselnetz kann durch eine AC-Last gebildet werden. In einer Ausführungsform des Inselnetzes ist die Last jedoch als eine Gleichstromlast, insbesondere als ein Elektrolyseur, ausgebildet. Dabei ist die Gleichstromlast / der Elektrolyseur über einen AC/DC-Wandler an die AC-Leitung des Inselnetzes angeschlossen. Sofern das Inselnetz eine Hochspannungs-Übertragungsstrecke aufweist, ist die Gleichspannungslast / der Elektrolyseur über einen Transformator an die Hochspannungsleitung des Inselnetzes angeschlossen. Das Inselnetz kann in einer Ausführungsform eine Speichereinheit aufweisen, die über einen bidirektional betreibbaren DC/AC-Wandler an die AC-Leitung des Inselnetzes angeschlossen ist. Hierzu muss der bidirektional betreibbare DC/AC-Wandler nicht zwingend ein spannungsstellender DC/AC-Wandler sein. Vielmehr ist es ausreichend, wenn der DC/AC-Wandler stromstellend ausgebildet ist.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Ausführungsform eines erfindungsgemäßen Inselnetzes;
- **Fig. 2**: zeigt ein Flussdiagramm einer Ausführungsform des erfindungsgemäßen Verfahrens;
- **Fig. 3a & 3b**: zeigt eine Ausführungsform des Verfahrens, bei dem das Verändern der Frequenz-Leistung-Kennlinie über eine Verschiebung parallel zur Frequenzachse erfolgt; und
- **Fig. 4a & 4b**: zeigt eine weitere Ausführungsform des Verfahrens, bei dem die Frequenz-Leistung-Kennlinie durch eine Gerade beschrieben wird, und das Verändern der Frequenz-Leistung-Kennlinie über eine Änderung der Geradensteigung erfolgt.

### FIGURENBESCHREIBUNG

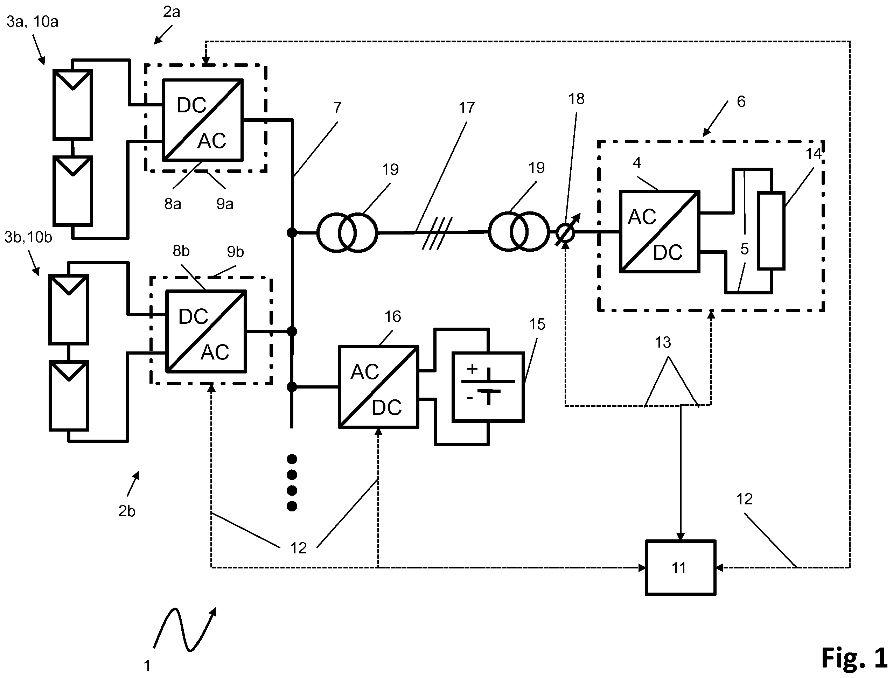

In **Fig. 1** ist eine Ausführungsform des erfindungsgemäßen Inselnetzes 1 dargestellt. Das Inselnetz 1 weist zwei Energieerzeuger 2a, 2b auf, die an eine AC-Leitung 7 des Inselnetzes 1 angeschlossen sind. Jeder der Energieerzeuger 2a, 2b ist in Form einer Photovoltaik (PV) - Anlage mit einem Photovoltaik (PV) - Generator 10a, 10b als Energiequelle 3a, 3b und einem daran angeschlossenen spannungsstellenden Umrichter 9a, 9b ausgebildet. Der Umrichter 9a, 9b ist jeweils ausgelegt, eine Wechselspannung gemäß einer in dem jeweiligen Umrichter 9a, 9b hinterlegten Frequenz-Leistung-Kennlinie zu stellen. Hierzu weist jeder der Umrichter 9a, 9b einen DC/AC-Wandler 8a, 8b auf. Das Inselnetz 1 beinhaltet ferner eine Last 6 in Form einer Gleichstromlast 14, beispielsweise eines Elektrolyseurs, die/der über einen AC/DC-Wandler 4 mit der AC Leitung 7 des Inselnetzes 1 verbunden ist. Das Inselnetz 1 weist weiterhin eine Hochspannungsleitung 17 auf, die über Transformatoren 19 an die AC-Leitung 7 angeschlossen ist. Eine Steuereinheit 11 zur Steuerung der spannungsstellenden Umrichter 9a, 9b ist mit diesen über gestrichelt illustrierte Steuer- und Kommunikationsverbindungen 12 verbunden, über die die Steuereinheit 11 der Gruppe der Umrichter 9a, 9b auch den Vorgabewert der Spannungsamplitude Û₀ übermittelt. Weiterhin ist die Steuereinheit 11 über gestrichelt dargestellte Steuer- und Kommunikationsverbindungen 13 mit einer Detektionseinheit 18 zur Detektion einer Frequenz f₂ und optional einer Spannungsamplitude Û₀ einer Wechselspannung in dem Inselnetz 1 verbunden. Über diese Steuer- und Kommunikationsverbindung 13 erfolgt auch die Steuerung der Detektionseinheit 18 und der Last 6.

Beispielhaft ist in Fig. 1 eine Gruppe von zwei Energieerzeugern 2a, 2b dargestellt. Die Gruppe kann jedoch auch durch lediglich einen Energieerzeuger ersetzt werden, oder mehr als zwei Energieerzeuger beinhalten. Dem DC/AC-Wandler 8a, 8b jedes Umrichters 9a, 9b kann ein DC/DC-Wandler, insbesondere ein Hochsetzsteller (in Fig. 1 nicht dargestellt) vorgeschaltet sein. Das Inselnetz 1 ist exemplarisch dreiphasig dargestellt, was schematisch durch die drei Querstriche innerhalb der Hochspannungsleitung 17 illustriert ist. Es liegt jedoch im Rahmen der Erfindung, dass das Inselnetz 1 auch eine andere Anzahl an Phasenleitern aufweisen kann. Weiterhin ist ein Energiespeicher in Form einer Batterie 15 über einen bidirektional betreibbaren stromstellenden AC/DC-Wandler 16 an die AC-Leitung 7 des Inselnetzes 1 angeschlossen. Der Energiespeicher in Verbindung mit dem AC/DC-Wandler 16 ermöglicht es, kurzzeitige Schwankungen in der Leistung der regenerativen Energiequellen 3a, 3b abzupuffern, ohne zwingend die Spannungsamplitude Û₀ der Wechselspannung und damit die von der Last verbrauchte Leistung anzupassen. Das kann insbesondere für eine träge reagierende Last 6 vorteilhaft sein. Der Energiespeicher und auch der damit verbundene bidirektionale AC/DC-Wandler 16 stellen jedoch nur optionale Komponenten des erfindungsgemäßen Inselnetzes dar, deren Existenz nicht zwingend erforderlich ist.

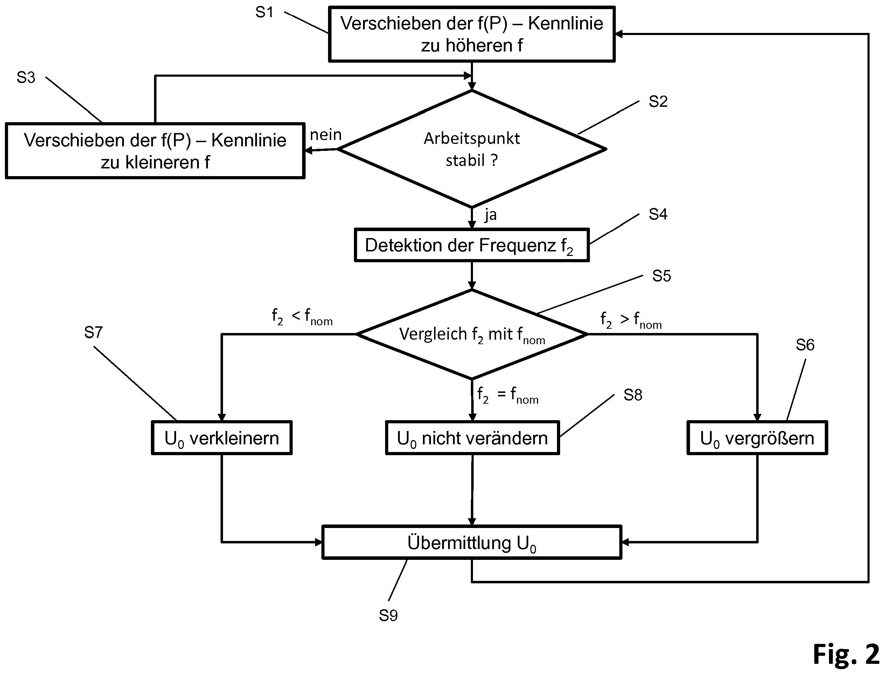

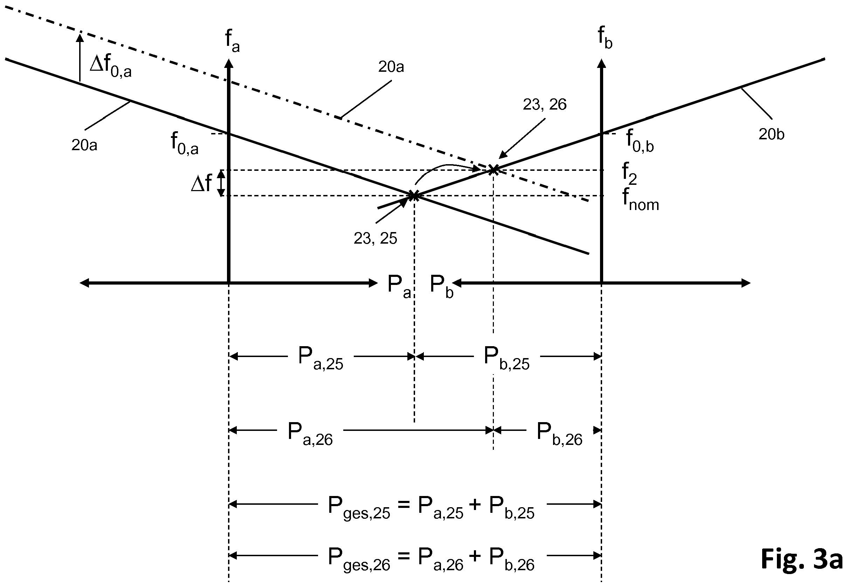

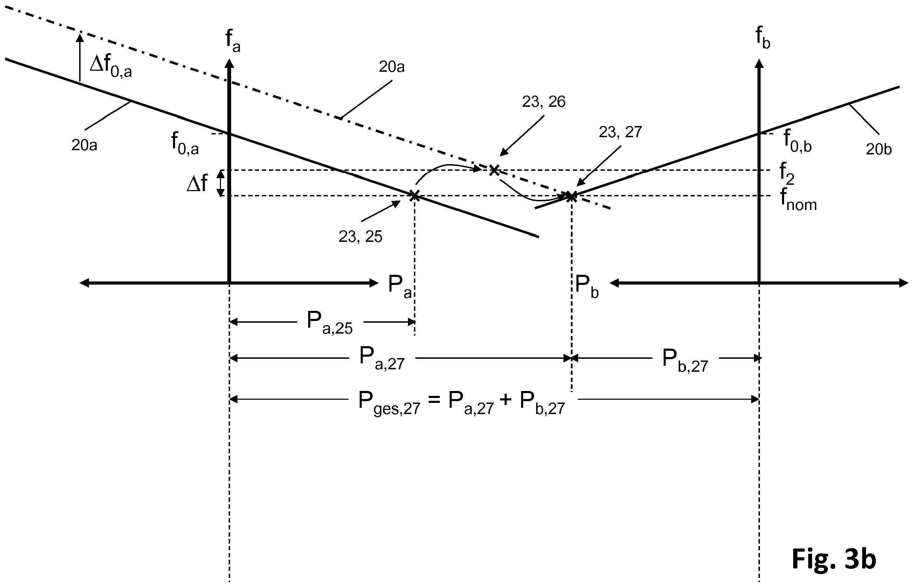

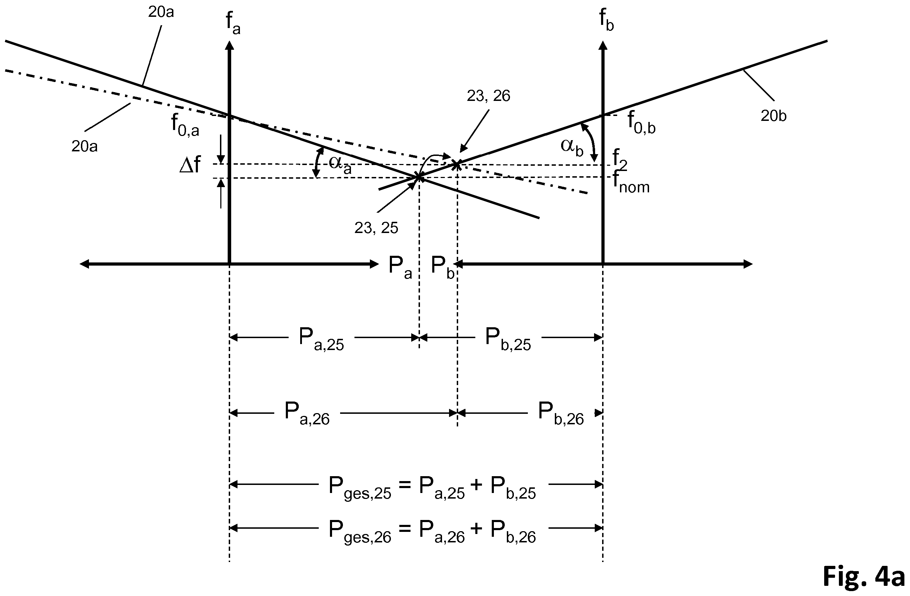

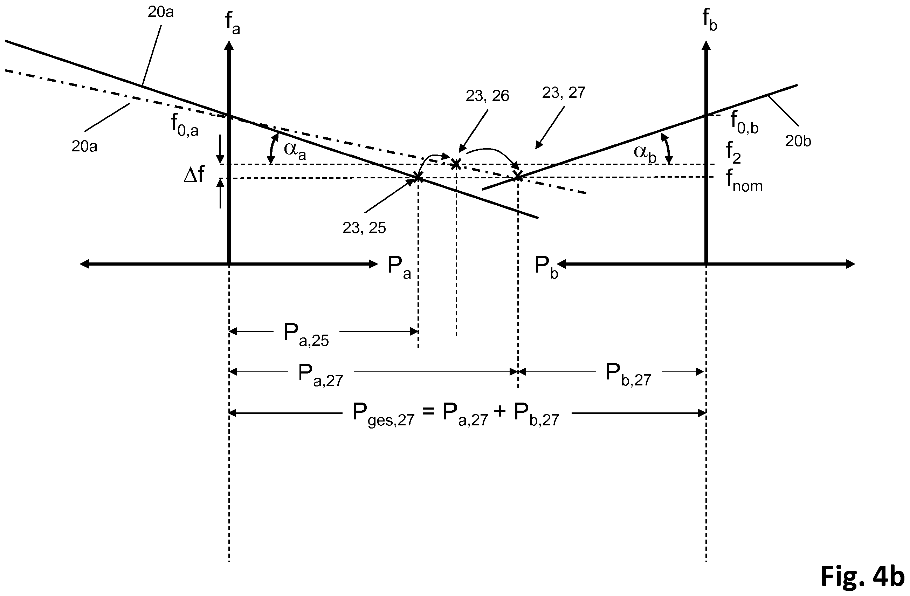

**Fig. 2** zeigt ein Flussdiagramm einer Ausführungsform des erfindungsgemäßen Verfahrens zum Betrieb des Inselnetzes 1 aus Fig. 1. Das Verfahren startet ausgehend von einem stabilen Arbeitspunkt aller Umrichter 9a, 9b und der daran angeschlossenen Energiequellen 3a, 3b, bei der die regenerativen Energiequellen 3a, 3b in der Lage sind, die gemäß der in den Umrichtern 9a, 9b hinterlegten Frequenz-Leistungs-Kennlinie der Nominalfrequenz fₙₒₘ zugeordneten Leistungen zu erbringen. Die Wechselspannung in dem Inselnetz 1 weist zunächst die Spannungsamplitude Û₀ und die Nominalfrequenz fₙₒₘ auf. In einem ersten Schritt S1 wird nun die Frequenz-Leistungs-Kennlinie eines Umrichters 9a der Gruppe der spannungsstellenden Umrichter 9a, 9b zu einer höheren Frequenz bei gleicher Leistung verschoben, um zu überprüfen, ob die dem Umrichter 9a zugeordnete Energiequelle 3a über eine größere als die aktuelle Leistung verfügt. Das Verschieben der Frequenz-Leistungs-Kennlinie des einen Umrichters 9a zu einer höheren Frequenz bei gleicher Leistung führt dazu, dass der entsprechende Umrichter 9a zumindest kurzzeitig eine höhere Leistung liefert, während der andere Umrichter 9b entsprechend weniger Leistung liefert. Es verändert sich somit zumindest kurzzeitig eine Leistungsverteilung Pₐ / P_{b} der beiden Umrichter 9a, 9b bei zunächst gleicher Gesamtleistung Pₐ + P_{b}. In dem Schritt S2 wird überprüft, ob die Energiequelle 3a des einen Umrichters 9a über die gemäß seiner Frequenz-Leistungs-Kennlinie der geänderten Frequenz zugeordnete höhere Leistung verfügt, mit anderen Worten: ob es sich bei dem geänderten Arbeitspunkt um einen stabilen Arbeitspunkt handelt. Die Überprüfung kann beispielsweise durch eine Detektion einer Spannung an einem dem Umrichter 9a zugeordneten Gleichspannungs-Zwischenkreis erfolgen. Sofern die Spannung an den Gleichspannungs-Zwischenkreis zusammenbricht und einen Schwellwert unterschreitet, geht das Verfahren davon aus, dass die Energiequelle 3a nicht über die entsprechende Leistung verfügt. Der Arbeitspunkt des Energieerzeugers 2a aus Energiequelle 3a und Umrichter 9a ist nicht stabil und das Verfahren verzweigt zum Schritt S3, bei dem die Frequenz-Leistungs-Kennlinie zu einer kleineren Frequenz bei gleicher Leistung Pₐ verschoben wird. Wieder wird im Schritt S2 überprüft, ob nun ein stabiler Arbeitspunkt des einen Umrichters 9a und der daran angeschlossenen Energiequelle 3a vorliegt. Die Schleife der Verfahrensschritte S2 und S3 wird so lange durchlaufen, bis der Arbeitspunkt stabil bleibt, das heißt die Spannung über dem dem einen Umrichter 9a zugeordneten Gleichspannungs-Zwischenkreis nicht zusammenbricht und insbesondere einen Schwellwert nicht unterschreitet. In diesem Fall geht das Verfahren davon aus, dass ein stabiler Arbeitspunkt vorliegt und das Verfahren verzweigt zum Schritt S4, bei dem die Frequenz f₂ der Wechselspannung in dem Inselnetz 1 detektiert wird. In dem folgenden Schritt S5 wird über einen Vergleich der detektierten Frequenz f₂ mit der Nominalfrequenz fₙₒₘ überprüft, ob die detektierte Frequenz f₂ größer als die, kleiner als die oder gleich der Nominalfrequenz fₙₒₘ der Wechselspannung ist. Ist die detektierte Frequenz f₂ größer als die Nominalfrequenz fₙₒₘ, so wird in einem Schritt S6 der Vorgabewert der Spannungsamplitude Û₀ durch die Steuereinheit 11 vergrößert. Ist hingegen die detektierte Frequenz f₂ geringer als die Nominalfrequenz fₙₒₘ, so wird in dem Schritt S7 der Vorgabewert der Spannungsamplitude Û₀ verkleinert. Für den Fall, dass die detektierte Frequenz f₂ gleich der Nominalfrequenz fₙₒₘ ist, bleibt in dem Schritt S8 der Vorgabewert der Spannungsamplitude Û₀ unverändert bestehen. Schließlich wird in dem Schritt S9 der aktualisierte Vorgabewert der Spannungsamplitude Û₀ der Gruppe der Umrichter 9a, 9b von der Steuereinheit 11 übermittelt. Durch diesen Schritt wird die Gesamtleistung Pₐ+P_{b} und somit die von der Last zu verbrauchende Leistung P_{Last} in dem Inselnetz 1 variiert. Wie im Zusammenhang mit den Figuren 3a und 3b bzw. den Figuren 4a und 4b erklärt wird, wird hierdurch gleichzeitig die Frequenz f₂ der Nominalfrequenz fₙₒₘ angenähert. Bei Schritt S9 endet das Verfahren und kann später beginnend mit Schritt S1 erneut ausgeführt werden. Das am Beispiel des einen Umrichters 9a beschriebene Verfahren läuft bevorzugt zeitlich parallel, aber unabhängig voneinander in jedem der beiden Umrichter 9a, 9b ab. Auf diese Weise wird eine zeitliche Änderung der maximal verfügbaren Leistung beider Energieerzeuger 2a, 2b verfolgt und die von der Last 6 verbrauchte Leistung P_{Last} wird so nachgeregelt, dass stets möglichst die maximal verfügbare Leistung beider Energieerzeuger Pₐ+P_{b} erzeugt und abgegriffen wird.

In **Fig. 3a** und **Fig. 3b** ist eine Ausführungsform des Verfahrens dargestellt, bei dem das Verändern der Frequenz-Leistung-Kennlinie 20a des einen Umrichters 9a über eine Verschiebung parallel zur Frequenzachse fₐ erfolgt. Beispielhaft ist die Frequenz-Leistungs-Kennlinie 20a, 20b beider Umrichter 9a, 9b in Form von Geraden dargestellt. Alternativ dazu kann jede der Frequenz-Leistungs-Kennlinien 20a, 20b jedoch auch durch eine andere monoton fallende Funktion beschrieben werden. In einem ersten Zustand 25 befinden sich die Umrichter 9a, 9b des Inselnetzes 1 innerhalb des Frequenz-Leistungs-Diagrammes an einem Arbeitspunkt 23, der durch einen Schnittpunkt der beiden Frequenz-Leistungs-Kennlinien 20a 20b bestimmt wird. Die Wechselspannung des Inselnetzes 1 weist in dem ersten Zustand 25 die Nominalfrequenz fₙₒₘ und die Spannungsamplitude Û₀ auf. In dem ersten Zustand 25 liefert der eine Umrichter 9a eine Leistung P_{a,25} und der andere Umrichter eine Leistung P_{b,25}. Beide Leistungen P_{a,25}, P_{b,25} wie auch deren Summe P_{ges,25}=P_{a,25}+P_{b,25} ist in den Figuren 2a und 3b schematisch skizziert. Es wird nun die Frequenz-Leistungs-Kennlinien 20a des einen Umrichters 9a parallel zur Frequenzachse zu einer höheren Frequenz bei gleicher Leistung verschoben. Die Verschiebung um den Betrag Δf_{0,a} ist in den Figuren 3a und 3b ebenfalls durch einen Pfeil gekennzeichnet. Nach der Verschiebung ergibt sich für den Umrichter 9a eine neue Frequenz-Leistungs-Kennlinien 20a, die in den Figuren 3a und 3b; strich-punktiert dargestellt ist. Die veränderte Frequenz-Leistungs-Kennlinien 20a weist einen neuen Schnittpunkt mit der Frequenz-Leistungs-Kennlinie 20b des anderen Umrichters 9b auf. Dieser neue Schnittpunkt definiert einen neuen Arbeitspunkt 23, der in einem auf den ersten Zustand 25 folgenden zweiten Zustand 26 angenommen wird. In dem zweiten Zustand 26 haben sich die Leistungen P_{a,26}, P_{b,26} der einzelnen Umrichter 9a, 9b, jedoch noch nicht deren Gesamtleistung P_{ges,26}= P_{a,26} + P_{b,26} geändert. Die geänderten Leistungen P_{a,26}, P_{b,26} der einzelnen Umrichter 9a, 9b, wie auch deren Gesamtleistung P_{ges,26} in dem zweiten Zustand 26 sind in den Figuren 3a und 3b durch Pfeile schematisch illustriert. Obwohl die Gesamtleistung P_{ges,26} im zweiten Zustand 26 gleich der Gesamtleistung P_{ges,25} im ersten Zustand 25 ist, wird in dem zweiten Zustand 26 die Gesamtleistung P_{ges,26} nun bei einer im Vergleich zur Nominalfrequenz fₙₒₘ höheren Frequenz f₂ innerhalb des Inselnetzes 1 transportiert. Die geänderte Frequenz f₂ des zweiten Zustandes 26 wird durch die Steuereinheit 11 in Verbindung mit der Detektionseinheit 18 gemessen. Aus der höheren Frequenz f₂ wird geschlossen, dass die Gruppe der Umrichter 9a, 9b in Verbindung mit den angeschlossenen Energiequellen 3a, 3b über eine höhere als die aktuelle Gesamtleistung P_{ges,26} verfügen. In Reaktion darauf wird der Vorgabewert der Spannungsamplitude Û₀ in dem Inselnetz 1 durch die Steuereinheit 11 vergrößert. Der vergrößerte Vorgabewert wird der Gruppe der Umrichter 9a, 9b durch die Steuereinheit 11 übermittelt, wodurch sich die Gesamtleistung P_{ges,27}=P_{a,27}+P_{b,27} der Gruppe der Umrichter 9a, 9b in einem auf den zweiten Zustand 26 folgenden dritten Zustand 27 vergrößert. In dem dritten Zustand 27 ergibt sich der gemeinsame Arbeitspunkt 23 der Umrichter 9a, 9b wieder aus dem Schnittpunkt der beiden Frequenz-Leistungs-Kennlinien 20a, 20b. Aus Figur 3b ist ersichtlich, dass der gemeinsame Arbeitspunkt 23 im dritten Zustand 27 wieder die Nominalfrequenz fₙₒₘ der Wechselspannung in dem Inselnetz 1 aufweist. Allerdings haben sich die Frequenz-Leistungs-Diagramme beider Umrichter 9a, 9b voneinander entfernt, was einer vergrößerten Gesamtleistung P_{ges,27}=P_{a,27}+P_{b,27} beider Umrichter 9a, 9b entspricht. Der dritte Zustand 27 ist mit den entsprechenden Leistungen P_{a,27}, P_{b,27} der einzelnen Umrichter 9a, 9b, sowie der sich ergebenden Gesamtleistung P_{ges,27} in Fig. 3b dargestellt.

In den **Fig. 3a** **und** **3b** ist lediglich eine Veränderung schematisch skizziert. Die dargestellte Veränderung wird nach gewissen Zeiten, vorteilhafterweise regelmäßig wiederholt, so, dass eine zeitliche Änderung der jeweilig zur Verfügung stehenden Leistung des zumindest einen Energieerzeugers 2a umfassend den zumindest einen Umrichter 9a und die an diesen angeschlossene Energiequelle 3a verfolgt wird. Des Weiteren erfolgt die oben am Beispiel des Umrichters 9a beschriebene Veränderung der Frequenz-Leistungs-Kennlinie 20a zeitlich parallel auch für den anderen Umrichter 9b, wobei auch dessen Frequenz-Leistungs-Kennlinie 20b entsprechend verändert wird. Hierbei meint zeitlich parallel nicht, dass jeder Teilschritt des Verfahrens zu gleichen Zeitpunkten in den einzelnen Umrichtern abläuft. Vielmehr bedeutet zeitlich parallel hier, dass die Verfahrensschritte in Summe zeitlich parallel in beiden Umrichtern 9a, 9b ablaufen, ohne, dass dabei einzelne Verfahrensschritte stets zeitgleich in beiden Umrichtern 9a, 9b erfolgen müssen. Somit wird auch für den jeweils anderen Umrichter 9b in Verbindung mit der an ihn angeschlossenen Energiequelle 2b eine zeitliche Änderung der jeweilig zur Verfügung stehenden Leistung verfolgt. Auf diese Weise wird die von der Last 6 verbrauchte Leistung P_{Last} stets einer jeweilig zur Verfügung stehenden Leistung P_{ges} = Pₐ + P_{b} der Gruppe der Umrichter 9a, 9b nachgeführt. In den Fig. 3a und 3b wird die Gesamtleistung P_{ges} durch eine Verschiebung der Frequenz-Leistungs-Kennlinien 20a, 20b zu einer höheren Frequenz bei gegebener Leistung vergrößert. Analog dazu erfolgt eine Verringerung der Gesamtleistung P_{ges} dadurch, dass die Frequenz-Leistungs-Kennlinien 20a, 20b zu einer niedrigeren Frequenz bei gegebener Leistung verschoben werden.

In **Fig. 4a** und **Fig. 4b** ist eine zweite Ausführungsform des Verfahrens schematisch dargestellt. Die in den Figuren 4a und 4b dargestellten Graphiken gleichen in vielen Merkmalen den bereits in den Figuren 3a und 3b dargestellten Diagrammen, weswegen zur Erläuterung dieser Merkmale auf die Figurenbeschreibung der Figuren 3a und 3b verwiesen wird. Im Folgenden werden daher hauptsächlich die Unterschiede der Figuren 4a und 4b zu den bereits beschriebenen Figuren 3a und 3b erläutert.

Analog zur Fig. 3a sind in Fig. 4a die den jeweiligen Umrichtern 9a, 9b zugeordneten Frequenz-Leistungs-Kennlinien 20a, 20b in zwei nebeneinander stehenden f(P) Diagrammen dargestellt. Beide Frequenz-Leistungs-Kennlinien 20a, 20b sind jeweils in Form einer Geraden ausgebildet. Jeder der Frequenz-Leistungs-Kennlinien 20a, 20b ist eine individuelle geraden Steigung αₐ, α_{b} zugeordnet. In einem ersten Zustand 25 ergibt sich ein gemeinsamer Arbeitspunkt 23 der beiden spannungsstellenden Umrichter 9a, 9b aus dem Schnittpunkt der beiden Frequenz-Leistungs-Kennlinien 20a, 20b. Im Gegensatz zu der Ausführungsform der Figuren 3a und 3b wird nun jedoch die Frequenz-Leistungs-Kennlinie 20a des einen Umrichters 9a nicht über eine Verschiebung parallel zur Frequenzachse, sondern über eine Änderung (hier: Vergrößerung) der Geradensteigung αₐ umgesetzt. Auch auf diese Weise ergibt sich in einem auf den ersten Zustand 25 folgenden zweiten Zustand 26 ein neuer Arbeitspunkt 23 der beiden Umrichter 9a, 9b bei zunächst noch relativ zum ersten Zustand 25 unveränderter Gesamtleistung P_{ges,26} = P_{ges,25} mit P_{ges,25} = P_{a,25} + P_{b,25} bzw. P_{ges,26} = P_{a,26} + P_{b,26}. Auch hier ist der Arbeitspunkt 23 in dem zweiten Zustand 26 durch eine oberhalb der Nominalfrequenz fₙₒₘ liegende Frequenz f₂ der Wechselspannung des Inselnetzes 1 gekennzeichnet. Die Frequenz f₂ wird über die Steuereinheit 11 gegebenenfalls in Verbindung mit der Detektionseinheit 18 gemessen und mit der Nominalfrequenz fₙₒₘ verglichen. Da in dem Beispiel die gemessene Frequenz f₂ oberhalb der Nominalfrequenz fₙₒₘ liegt, wird dies interpretiert, dass mehr als die aktuell durch die Energieerzeuger 2a, 2b erzeugte Leistung P_{ges,26} = P_{a,26} + P_{b,26} verfügbar ist. Entsprechend wird dann der Gruppe der Umrichter 9a, 9b durch die Steuereinheit 11 ein neuer Vorgabewert der Spannungsamplitude Û₀ übermittelt. In dem die Umrichter 9a, 9b nun eine Wechselspannung mit einer größeren Spannungsamplitude Û₀ stellen, vergrößert sich auch die von der Last 6 verbrauchte Leistung P_{Last} und die beiden Diagramme vergrößern ihren Abstand zueinander, wie in Fig. 4b dargestellt. Dabei ergibt sich in dem auf den zweiten Zustand 26 folgenden dritten Zustand 27 ein Arbeitspunkt 23, der wieder die Nominalfrequenz fₙₒₘ der Wechselspannung des Inselnetzes 1 aufweist. Allerdings hat sich die im dritten Zustand 27 von dem einen Umrichter 9a in Verbindung mit der angeschlossenen Energiequelle 3a gelieferte Leistung P_{a,27} - und damit auch die Gesamtleistung P_{ges,27} = P_{a,27} + P_{b,27} - relativ zum ersten 25 beziehungsweise zum zweiten Zustand 26 vergrößert.

Die Erfindung kann in äquivalenter Weise ebenfalls mit einer den Umrichtern zugeordneten monoton steigenden Frequenz-Leistungs-Kennlinie ausgeführt werden, wobei die Spannungsamplitude Û₀ dann bei Überschreiten der Nominalfrequenz fₙₒₘ abgesenkt und bei Unterschreiten erhöht wird. Entsprechend wird dann auch die Kennlinie abschnittsweise zu niedrigeren Frequenzen verschoben, um die Verfügbarkeit einer höheren Leistung zu überprüfen, beziehungsweise wird die Kennlinie abschnittsweise zu höheren Frequenzen verschoben, wenn die der Kennlinie zugeordnete Leistung nicht erbracht werden kann. Diese Variante soll als äquivalente Ausführung der Erfindung und nicht als nicht beanspruchte Alternative verstanden werden. Zur Verbesserung der Verständlichkeit und Knappheit der Ansprüche und der Beschreibung wurde allerdings nur die dem Wortlaut der Ansprüche entsprechende Variante näher erläutert.

**BEZUGSZEICHENLISTE**

| | | |
|---|---|---|
| 1 | | Inselnetz |
| 2a, 2b | | Energieerzeuger |
| 3a, 3b | | Energiequelle |
| 4 | | AC/DC-Wandler |
| 5 | | DC-Leitung |
| 6 | | Last |
| 7 | | AC-Leitung |
| 8a, 8b | | DC/AC-Wandler |
| 9a, 9b | | Umrichter |
| 10a, 10b | | Photovoltaik (PV) - Generator |
| 11 | | Steuereinheit |
| 12 | | Steuer- und Kommunikationsverbindung |
| 13 | | Steuer- und Kommunikationsverbindung |
| 14 | | Gleichstromlast |
| 15 | | Batterie |
| 16 | | DC/AC- Wandler |
| 17 | | Hochspannungsleitung |
| 18 | | Detektionseinheit |
| 19 | | Transformator |
| 20a, 20b | | Frequenz-Leistungs-Kennlinie |
| 23 | | Arbeitspunkt |
| 25, 26, 27 | | Zustand |
| S1 - S8 | | Verfahrensschritt |
| | | |
| | | |
| | | |
| | | |
| | | |

## Patentansprüche

1. Verfahren zum Betreiben eines Inselnetzes (1) mit
- mindestens einem spannungsstellenden Umrichter (9a, 9b), der Leistung einer angeschlossenen regenerativen Energiequelle (3a, 3b) in AC-Leistung entsprechend einer Frequenz-Leistungs-Kennlinie (20a, 20b) umwandelt,
- einer Last (6), deren Leistungsverbrauch von einer Spannungsamplitude (Û₀) einer Wechselspannung des Inselnetzes (1) abhängt, wobei die Spannungsamplitude (Û₀) in dem Inselnetz (1) durch eine Steuereinheit (11) des Inselnetzes variiert wird und die variable Spannungsamplitude (Û₀) zur Anpassung einer von der Last (6) verbrauchten Leistung (P_{Last}) genutzt wird, und
- wobei die Steuereinheit (11) dem mindestens einen spannungsstellenden Umrichter (9a, 9b) einen Vorgabewert der Spannungsamplitude (Û₀) übermittelt, wobei das Verfahren die folgenden Schritte zur Anpassung der von der Last (6) zu verbrauchenden Leistung (P_{Last}) umfasst, wobei die Schritte wiederholt durchlaufen werden, um eine zeitliche Änderung einer maximal verfügbaren Leistung der regenerativen Energiequelle (3a, 3b) zu verfolgen:
- Verändern der Frequenz-Leistungs-Kennlinie (20a, 20b) des mindestens einen Umrichters (9a, 9b) in Abhängigkeit einer verfügbaren Leistung der regenerativen Energiequelle (3a, 3b),
- wobei die Frequenz-Leistungs-Kennlinie (20,a 20b) zumindest abschnittsweise zu einer höheren Frequenz bei gegebener Leistung geändert wird, um zu überprüfen, ob die verfügbare Leistung der regenerativen Energiequelle (3a, 3b) über der aktuellen Leistung liegt, und
- wobei die Frequenz-Leistungs-Kennlinie (20a, 20b) zumindest abschnittsweise zu niedrigerer Frequenz bei gegebener Leistung geändert wird, wenn die regenerative Energiequelle (3a, 3b) die gemäß der Frequenz-Leistungs-Kennlinie (20a, 20b) der aktuellen Frequenz zugeordnete Leistung nicht erbringen kann,
- Bestimmen einer Frequenz (f₂) der Wechselspannung in dem Inselnetz (1) durch eine mit der Steuereinheit (11) verbundene Detektionseinheit (18) als Folge der Veränderung der Frequenz-Leistungs-Kennlinie (20a, 20b) durch die Steuereinheit (11), und
- Neubestimmen eines Vorgabewerts der Spannungsamplitude (Û₀) und Übermittlung des neubestimmten Vorgabewertes an den mindestens einen spannungsstellenden Umrichter (9a, 9b) durch die Steuereinheit (11), wobei der Vorgabewert erhöht wird, um den Leistungsverbrauch der Last (6) zu erhöhen, wenn die bestimmte Frequenz (f₂) über einer Nominalfrequenz (fₙₒₘ) liegt, und wobei der Vorgabewert erniedrigt wird, um den Leistungsverbrauch der Last (6) zu verringern, wenn die bestimmte Frequenz (f₂) unter der Nominalfrequenz (fₙₒₘ) liegt.

2. Verfahren nach Anspruch 1, **dadurch gekennzeichnet, dass** vor der Erhöhung des Vorgabewertes der Spannungsamplitude (Û₀),
- überprüft wird, ob die über den zumindest einen Umrichter (9a, 9b) fließende Leistung (Pₐ, P_{b}) eine Leistungsgrenze (P_{max,a}, P_{max,b}) des entsprechenden Umrichters (9a, 9b) überschreitet oder zu überschreiten droht, wobei eine Erhöhung des Vorgabewertes der Spannungsamplitude (Û₀) nur dann erfolgt, wenn die Überprüfung signalisiert, dass auch mit erhöhtem Vorgabewert der Spannungsamplitude (Û₀) ein Überschreiten der Leistungsgrenze (P_{max,a}, P_{max,b}) des entsprechenden Umrichters (9a, 9b) ausgeschlossen ist, oder
- überprüft wird, ob ein Verbrauch (P_{Last}) der Last (6) einen maximal zulässigen Verbrauch (P_{max,Last}) der Last (6) überschreitet oder zu überschreiten droht, wobei eine Erhöhung des Vorgabewertes der Spannungsamplitude (Û₀) nur dann erfolgt, wenn die Überprüfung signalisiert, dass auch mit erhöhtem Vorgabewert der Spannungsamplitude (Û₀) ein Überschreiten des maximal zulässigen Verbrauchs (P_{max,Last}) der Last (6) ausgeschlossen ist.

3. Verfahren nach Anspruch 1 oder 2, **dadurch gekennzeichnet, dass** bei einer Überprüfung, ob die regenerative Energiequelle (3a, 3b) die gemäß der Frequenz-Leistungs-Kennlinie (20a, 20b) der aktuellen Frequenz zugeordnete Leistung erbringen kann, ein Spannungswert an einem dem entsprechenden Umrichter (9a, 9b) zugeordneten Gleichspannungs-Zwischenkreis gemessen wird.

4. Verfahren nach Anspruch 3, **dadurch gekennzeichnet, dass** dann, wenn der gemessene Spannungswert einen Spannungsschwellwert unterschreitet, signalisiert wird, dass die regenerative Energiequelle (3a, 3b) die gemäß der Frequenz-Leistungs-Kennlinie (20a, 20b) der aktuellen Frequenz zugeordnete Leistung nicht erbringen kann.

5. Verfahren nach Anspruch 2, **dadurch gekennzeichnet, dass** die Leistungsgrenze (P_{max,a}, P_{max,b}) des entsprechenden Umrichters (9a, 9b) abhängig von maximal erlaubten Strom- und/oder Spannungswerten des Umrichters (9a, 9b) ermittelt wird.

6. Verfahren nach Anspruch 2 oder 5, **dadurch gekennzeichnet, dass** bei bekannten Werten der Leistungsgrenze (P_{max,a}, P_{max,b}) des Umrichters (9a, 9b), der dem Umrichter (9a, 9b) zugeordneten regenerativen Energiequelle (3a, 3b) und/oder des maximal zulässigen Verbrauchs (P_{max,Last}) der Last (6) die Anpassung der von der Last (6) zu verbrauchenden Leistung derart erfolgt, dass
- die über den zumindest einen Umrichter (9a, 9b) fließende Leistung (Pₐ, P_{b}) um mindestens einen vorgegebenen Toleranzwert unterhalb der Leistungsgrenze (P_{max,a}, P_{max,b}) des entsprechenden Umrichters (9a, 9b) und/oder der dem Umrichter (9a, 9b) zugeordneten regenerativen Energiequelle (3a, 3b) liegt, oder
- ein Verbrauch (P_{Last}) der Last (6) um mindestens einen vorgegebenen Toleranzwert unterhalb des maximal zulässigen Verbrauchs (P_{max,Last}) der Last (6) liegt.

7. Verfahren nach einem der Ansprüche 1 bis 6, **dadurch gekennzeichnet, dass** die Veränderung der Frequenz-Leistungs-Kennlinie (20a, 20b) eine Parallelverschiebung zumindest eines Abschnittes der Frequenz-Leistungs-Kennlinie (20a, 20b) in Richtung der Frequenz-Achse aufweist.

8. Verfahren nach einem der Ansprüche 1 bis 7, **dadurch gekennzeichnet, dass** die Frequenz-Leistungs-Kennlinie (20a, 20b) zumindest in einem Abschnitt durch eine Gerade beschrieben wird, wobei die Veränderung der Frequenz-Leistungs-Kennlinie (20a, 20b) eine Änderung einer Geradensteigung (αₐ, α_{b}) in dem betreffenden Abschnitt aufweist.

9. Verfahren nach einem der vorhergehenden Ansprüche, **dadurch gekennzeichnet, dass** der zumindest eine spannungsstellende Umrichter (9a, 9b) eine Gruppe mit einer Mehrzahl von spannungsstellenden Umrichtern (9a, 9b) beinhaltet, die jeweils zur Umwandlung von Leistung angeschlossener regenerativer Energiequellen (3a, 3b) in AC-Leistung entsprechend einer Frequenz-Leistung-Kennlinie (20a, 20b) eingerichtet sind und wobei das Verändern der Frequenz-Leistungs-Kennlinie (20a, 20b) in Abhängigkeit der verfügbaren Leistung der dem Umrichter (9a, 9b) zugeordneten Energiequelle (3a, 3b) für jeden einzelnen der Umrichter (9a, 9b) erfolgt.

10. Inselnetz (1) mit
- zumindest einem einen DC/AC-Wandler (8a, 8b) aufweisenden spannungsstellenden Umrichter (9a, 9b), dessen Eingang an eine regenerative Energiequelle (3a, 3b) des Inselnetzes (1) und dessen Ausgang an eine AC-Leitung (7) des Inselnetzes (1) angeschlossen ist,
- wobei der Umrichter (9a, 9b) ausgelegt ist, eine Wechselspannung in dem Inselnetz (1) in Abhängigkeit einer dem Umrichter (9a, 9b) zugeordneten Frequenz-Leistungs-Kennlinie (20a, 20b) zu stellen,
- einer Last (6), deren Leistungsverbrauch von einer Spannungsamplitude (Û₀) der Wechselspannung in dem Inselnetz (1) abhängig ist,
- einer Steuereinheit (11) zur Steuerung des zumindest einen spannungsstellenden Umrichters (9a, 9b), die ausgelegt ist, dem zumindest einen spannungsstellenden Umrichter (9a, 9b) einen Vorgabewert der Spannungsamplitude (Û₀) für die Wechselspannung des Inselnetzes (1) zu übermitteln und
- einer mit der Steuereinheit (11) verbundenen Detektionseinheit (18) zur Bestimmung einer Frequenz (f₂) der Wechselspannung in dem Inselnetz (1),
- wobei die Steuereinheit (11) in Verbindung mit dem zumindest einen Umrichter (9a, 9b) und der an den Umrichter (9a, 9b) angeschlossenen regenerativen Energiequelle (3a, 3b) ausgelegt ist, die folgenden Verfahrensschritte in wiederholter Art und Weise zu durchlaufen, um eine zeitliche Änderung einer maximal verfügbaren Leistung der regenerativen Energiequelle (3a, 3b) zu verfolgen:
- Verändern der Frequenz-Leistungs-Kennlinie (20a, 20b) des mindestens einen Umrichters (9a, 9b) in Abhängigkeit einer verfügbaren Leistung der regenerativen Energiequelle (3a, 3b),
- wobei die Frequenz-Leistungs-Kennlinie (20,a 20b) zumindest abschnittsweise zu einer höheren Frequenz bei gegebener Leistung geändert wird, um zu überprüfen, ob die verfügbare Leistung der regenerativen Energiequelle (3a, 3b) über der aktuellen Leistung liegt, und
- wobei die Frequenz-Leistungs-Kennlinie (20a, 20b) zumindest abschnittsweise zu niedrigerer Frequenz bei gegebener Leistung geändert wird, wenn die regenerative Energiequelle (3a, 3b) die gemäß der Frequenz-Leistungs-Kennlinie (20a, 20b) der aktuellen Frequenz zugeordnete Leistung nicht erbringen kann,
- Bestimmen einer Frequenz (f₂) der Wechselspannung in dem Inselnetz (1) durch die mit der Steuereinheit (11) verbundene Detektionseinheit (18) als Folge der Veränderung der Frequenz-Leistungs-Kennlinie (20a, 20b) durch die Steuereinheit (11), und
- Neubestimmen eines Vorgabewerts der Spannungsamplitude (Û₀) und Übermittlung des neubestimmten Vorgabewertes an den mindestens einen spannungsstellenden Umrichter (9a, 9b) durch die Steuereinheit (11), wobei der Vorgabewert erhöht wird, um den Leistungsverbrauch der Last (6) zu erhöhen, wenn die bestimmte Frequenz (f₂) über einer Nominalfrequenz (fₙₒₘ) liegt, und wobei der Vorgabewert erniedrigt wird, um den Leistungsverbrauch der Last (6) zu verringern, wenn die bestimmte Frequenz (f₂) unter der Nominalfrequenz (fₙₒₘ) liegt.

11. Inselnetz (1) nach Anspruch 10, **dadurch gekennzeichnet, dass** der zumindest eine spannungsstellende Umrichter (9a, 9b) eine Gruppe mit mehreren spannungsstellenden Umrichtern (9a, 9b) umfasst, wobei zumindest ein Umrichter (9a, 9b) der Gruppe in Verbindung mit der an den Umrichter (9a, 9b) angeschlossenen regenerativen Energiequelle (2a, 2b) als eine Photovoltaik (PV) - Anlage, oder eine Windkraft - Anlage ausgebildet ist.

12. Inselnetz (1) nach Anspruch 10 oder 11, **dadurch gekennzeichnet, dass** das Inselnetz (1) eine Hochspannungs-Übertragungsstrecke mit einer Hochspannungsleitung (17) aufweist, die über einen Transformator (19) an die AC-Leitung (7) des Inselnetzes (1) angeschlossen ist.

13. Inselnetz (1) nach einem der Ansprüche 10 bis 12, **dadurch gekennzeichnet, dass** die Last (6) als eine Gleichstromlast (14), insbesondere als ein Elektrolyseur, ausgebildet ist, die/der über einen AC/DC-Wandler (4) an die AC-Leitung (7) des Inselnetzes (1) angeschlossen ist.

14. Inselnetz (1) nach einem der Ansprüche 10 bis 13, **dadurch gekennzeichnet, dass** das Inselnetz (1) eine Speichereinheit (15) aufweist, die über einen bidirektional betreibbaren stromstellenden DC/AC-Wandler (16) an die AC-Leitung (7) das Inselnetzes (1) angeschlossen ist.

## Claims

1. A method for operating an island network (1) comprising
- at least one voltage-controlling converter (9a, 9b) converting power of a regenerative power sources (3a, 3b) connected thereto into AC power in accordance with a frequency-power characteristic curve (20a, 20b),
- a load (6), the power consumption of which depends on a voltage amplitude (Uo) of an AC voltage of the island network (1), wherein the voltage amplitude (Uo) of the island network (1) is varied by a control unit (11) of the island network (1) and wherein the variable voltage amplitude (Û₀) is used for adjusting the power consumption of the load (6),
- wherein the control unit (11) transmits a setpoint value of the voltage amplitude (Uo) to the at least one voltage-controlling converter (9a, 9b),
wherein the method comprises the following steps for adjusting the power (P_{Last}) to be consumed by the load (6), wherein the steps are are performed repeatedly in order to track a change of the maximum available power of the regenerative power source (3a, 3b) over time:
- modifying the frequency-power characteristic curve (20a, 20b) of the at least one converter (9a, 9b) as a function of an available power of the regenerative power source (3a, 3b),
- wherein the frequency-power characteristic curve (20a, 20b) is modified, at least in sections, to a higher frequency at a given power in order to check whether the available power of the regenerative power source (3a, 3b) lies above the current power, and
- wherein the frequency-power characteristic curve (20a, 20b) is modified, at least in sections, to a lower frequency at a given power if the regenerative power source (3a, 3b) cannot provide the power associated with the current frequency according to the frequency-power characteristic curve (20a, 20b),
- determining a frequency (f₂) of the AC voltage in the island network (1) by a detection unit (18) connected to the control unit (11) as a consequence of the modification to the frequency-power characteristic curve (20a, 20b) by the control unit (11), and
- redetermining a setpoint value of the voltage amplitude (Û₀) and transmitting the redetermined setpoint value to the at least one voltage-controlling converter (9a, 9b) by means of the control unit (11), wherein the setpoint value is increased in order to increase the power consumption of the load (6), if the determined frequency (f₂) lies above a nominal frequency (fₙₒₘ), and wherein the setpoint value is reduced, in order to decrease the power consumption of the load (6), if the determined frequency (f₂) lies below the nominal frequency (fₙₒₘ).

2. The method as claimed in claim 1, **characterized in that**, prior to increasing the setpoint value of the voltage amplitude (Û₀),
- a check is carried out as to whether the power (Pₐ, P_{b}) flowing through the at least one converter (9a, 9b) exceeds, or threatens to exceed, a power limit (P_{max,a}, P_{max,b}) of the corresponding converter (9a, 9b), wherein the setpoint value of the voltage amplitude (Uo) is increased only, if the check signals that exceeding the power limit (P_{max,a}, P_{max,b}) of the corresponding converter (9a, 9b) is precluded even with an increased setpoint value of the voltage amplitude (Û₀), or
- a check is carried out as to whether the consumption (P_{Last}) of the load (6) exceeds, or threatens to exceed, a maximum admissible consumption (P_{max,Last}) of the load (6), wherein the setpoint value of the voltage amplitude (Uo) is increased only, if the check signals that exceeding the maximum admissible consumption (P_{max,Last}) of the load (6) is precluded even with an increased setpoint value of the voltage amplitude (Uo).

3. The method as claimed in claim 1 or 2, **characterized in that** a voltage value at a DC link circuit associated with the corresponding converter (9a, 9b) is measured during a check as to whether the regenerative power source (3a, 3b) can provide the power associated with the current frequency according to the frequency-power characteristic curve (20a, 20b).

4. The method as claimed in claim 3, **characterized in that** it is signaled, that the regenerative power source (3a, 3b) is unable to provide the power associated with the current frequency according to the frequency-power characteristic curve (20a, 20b), if the measured voltage value drops below a voltage threshold.

5. The method as claimed in claim 2, **characterized in that** the power limit (P_{max,a}, P_{max,b}) of the corresponding converter (9a, 9b) is ascertained dependent on maximum permitted current and/or voltage values of the converter (9a, 9b).

6. The method as claimed in claim 2 or 5, **characterized in that** in the case of known values of the power limit (P_{max,a}, P_{max,b}) of the converter (9a, 9b), of the regenerative power source (3a, 3b) associated with the converter (9a, 9b) and/or of the maximum admissible consumption (P_{max,Last}) of the load (6) the power to be consumed by the load (6) is adjusted in such a way that
- the power (Pₐ, P_{b}) flowing through the at least one converter (9a, 9b) lies by at least one preset tolerance value below the power limit (P_{max,a}, P_{max,b}) of the corresponding converter (9a, 9b) and/or of the regenerative power source (3a, 3b) associated with the converter (9a, 9b), or
- a consumption (P_{Last}) of the load (6) lies by at least one preset tolerance value below the maximum admissible consumption (P_{max,Last}) of the load (6).

7. The method as claimed in any one of claims 1 to 6, **characterized in that** the modification of the frequency-power characteristic curve (20a, 20b) includes a parallel displacement of at least one section of the frequency-power characteristic curve (20a, 20b) in the direction of the frequency axis.

8. The method as claimed in any one of claims 1 to 7, **characterized in that** the frequency-power characteristic curve (20a, 20b) is described by a straight line in at least one section, wherein the change in the frequency-power characteristic curve (20a, 20b) includes a change in the straight-line slope (αₐ, α_{b}) in the relevant section.

9. The method as claimed in any one of the preceding claims, **characterized in that** the at least one voltage controlling converter (9a, 9b) comprises a plurality of voltage-controlling converters (9a, 9b), which are each configured to convert power of connected regenerative power sources (3a, 3b) into AC power in accordance with a frequency-power characteristic curve (20a, 20b), and wherein the modification of the frequency-power characteristic curve (20a, 20b) as a function of the available power of the power source (3a, 3b) associated with the converter (9a, 9b) is implemented for each individual converter (9a, 9b).

10. An island network (1), comprising
- at least one voltage-controlling converter (9a, 9b) comprising a DC/AC converting module (8a, 8b), the input of said converter being connected to a regenerative power source (3a, 3b) and the output thereof being connected to an AC conductor (7) of the island network (1),
- wherein the converter (9a, 9b) is configured to control an AC voltage in the island network (1) as a function of a frequency-power characteristic curve (20a, 20b) associated with the converter (9a, 9b),
- a load (6), the power consumption of which depends on a voltage amplitude (Uo) of the AC voltage in the island network (1),
- a control unit (11) for controlling the at least one voltage-controlling converter (9a, 9b), said control unit being configured to transmit a setpoint value of the voltage amplitude (Uo) for the AC voltage of the island network (1) to the at least one voltage-controlling converter (9a, 9b), and
- a detection unit (18) for determining a frequency (f₂) of the AC voltage in the island network (1), said detection unit being connected to the control unit (11),
- wherein the control unit (11) in in conjunction with the at least one converter (9a, 9b) and the regenerative power source (2a, 2b) connected to the converter (9a, 9b) is configured to carry out the following steps repeatedly in order to track a change of the maximum available power of the regenerative power source (3a, 3b) over time:
- modifying the frequency-power characteristic curve (20a, 20b) of the at least one converter (9a, 9b) as a function of an available power of the regenerative power source (3a, 3b),
- wherein the frequency-power characteristic curve (20a, 20b) is modified, at least in sections, to a higher frequency at a given power in order to check whether the available power of the regenerative power source (3a, 3b) lies above the current power, and
- wherein the frequency-power characteristic curve (20a, 20b) is modified, at least in sections, to a lower frequency at a given power if the regenerative power source (3a, 3b) cannot provide the power associated with the current frequency according to the frequency-power characteristic curve (20a, 20b),
- determining a frequency (f₂) of the AC voltage in the island network (1) by the detection unit (18) connected to the control unit (11) as a consequence of the modification to the frequency-power characteristic curve (20a, 20b) by the control unit (11), and
- redetermining a setpoint value of the voltage amplitude (Uo) and transmitting the redetermined setpoint value to the at least one voltage-controlling converter (9a, 9b) by means of the control unit (11), wherein the setpoint value is increased in order to increase the power consumption of the load (6), if the determined frequency (f₂) lies above a nominal frequency (fₙₒₘ), and wherein the setpoint value is reduced, in order to decrease the power consumption of the load (6), if the determined frequency (f₂) lies below the nominal frequency (fₙₒₘ).

11. The island network (1) as claimed in claim 10, **characterized in that** the at least one converter (9a, 9b) comprises a group of multiple voltage-controlling converters (9a, 9b), wherein at least one converter (9a, 9b) of the group in conjunction with the regenerative power source (2a, 2b) connected to the converter (9a, 9b) is embodied as a photovoltaic (PV) system or as a wind power system.

12. The island network (1) as claimed in claim 10 or 11, **characterized in that** the island network (1) comprises a high-voltage transmission path with a high-voltage conductor (17) connected by way of a transformer (19) to the AC conductor (7) of the island network (1).

13. The island network (1) as claimed in any one of claims 10 to 12, **characterized in that** the load (6) is embodied as a DC load (14), in particular as an electrolyzer, which is connected via an AC/DC converting module (4) to the AC conductor (7) of the island network (1).

14. The island network (1) as claimed in any one of claims 10 to 13, **characterized in that** the island network (1) comprises a storage unit (15) connected to the AC conductor (7) of the island network (1) via a bidirectionally operable current controlling DC/AC converting module (16).

## Revendications

1. Procédé d'exploitation d'un réseau en site isolé (1) comportant
- au moins un convertisseur de réglage de tension (9a, 9b) qui convertit la puissance d'une source d'énergie régénérative raccordée (3a, 3b) en puissance alternative selon une caractéristique fréquence-puissance (20a, 20b),
- une charge (6) dont la consommation d'énergie dépend d'une amplitude de tension (Û0) d'une tension alternative du réseau en site isolé (1), l'amplitude de tension (Û0) dans le réseau en site isolé (1) étant modifiée par une unité de commande (11) du réseau en site isolé et l'amplitude de tension variable (Û0) étant utilisée pour ajuster une puissance (P_{Last}) consommée par la charge (6), et
- l'unité de commande (11) transmet une valeur par défaut de l'amplitude de tension (Û0) à l'au moins un convertisseur de réglage de tension (9a, 9b),
le procédé comprend les étapes suivantes pour adapter la puissance (P_{Last}) à consommer par la charge (6), les étapes sont exécutées de manière répétée afin de suivre un changement dans le temps d'une puissance disponible maximale de la source d'énergie régénérative (3a, 3b) :
- modification de la caractéristique fréquence-puissance (20a, 20b) de l'au moins un convertisseur (9a, 9b) en fonction d'une puissance disponible de la source d'énergie régénérative (3a, 3b),
- la caractéristique fréquence-puissance (20a, 20b) étant modifiée au moins en partie vers une fréquence plus élevée pour une puissance donnée afin de vérifier si la puissance disponible de la source d'énergie régénérative (3a, 3b) est supérieure à la puissance actuelle, et
- la caractéristique fréquence-puissance (20a, 20b) étant modifiée au moins en partie à une fréquence inférieure pour la puissance donnée si la source d'énergie régénérative (3a, 3b) ne peut pas fournir la puissance affectée à la fréquence actuelle selon la caractéristique fréquence-puissance (20a, 20b),
- détermination d'une fréquence (f2) de la tension alternative dans le réseau en site isolé (1) par une unité de détection (18) connectée à l'unité de commande (11) en conséquence de la variation de la caractéristique fréquence-puissance (20a, 20b) par l'unité de commande (11), et
- redétermination d'une valeur prédéfinie de l'amplitude de tension (Û0) et transmission de la valeur prédéfinie redéterminée à l'au moins un convertisseur de réglage de tension (9a, 9b) par l'unité de commande (11), la valeur prédéfinie étant augmentée, pour augmenter la consommation d'énergie de la charge (6) lorsque la fréquence déterminée (f2) est supérieure à une fréquence nominale (fₙₒₘ), et la valeur prédéfinie étant diminuée pour diminuer la consommation d'énergie de la charge (6) lorsque la fréquence déterminée (f2) est inférieure à la fréquence nominale (fₙₒₘ).

2. Procédé selon la revendication 1, **caractérisé en ce que,** avant d'augmenter la valeur prédéfinie de l'amplitude de la tension (Û₀),
- on vérifie si la puissance (Pₐ, P_{b}) passant par le au moins un convertisseur (9a, 9b) dépasse ou menace de dépasser une limite de puissance (P_{max,a}, P_{max,b}) du convertisseur correspondant (9a, 9b), dans lequel une augmentation de la valeur prédéfinie de l'amplitude de tension (Û0) n'a lieu que si le contrôle signale que même avec une valeur prédéfinie augmentée de l'amplitude de tension (Û0), un dépassement de la limite de puissance (P_{max,a}, P_{max,b}) de l'onduleur correspondant (9a, 9b) est exclu, ou
- on vérifie si une consommation (P_{Last}) de la charge (6) dépasse ou menace de dépasser une consommation maximale admissible (P_{max,Last}) de la charge (6), dans lequel une augmentation de la valeur prédéterminée de l'amplitude de tension (Û0) n'a lieu que si le contrôle signale qu'un dépassement de la consommation maximale admissible (P_{max,Last}) de la charge (6) est exclu même avec une valeur prédéterminée augmentée de l'amplitude de tension (Û0).

3. Procédé selon la revendication 1 ou 2, **caractérisé en ce que,** lors d'un contrôle si la source d'énergie régénérative (3a, 3b) peut produire la puissance affectée à la fréquence actuelle selon la caractéristique fréquence-puissance (20a, 20b), une valeur de tension est mesurée sur un lien continu affecté au convertisseur correspondant (9a, 9b).

4. Procédé selon la revendication 3, **caractérisé en ce que,** si la valeur de tension mesurée tombe en dessous d'une valeur de seuil de tension, il est signalé que la source d'énergie régénérative (3a, 3b) ne peut pas produire la puissance associée à la fréquence actuelle selon la caractéristique fréquence-puissance (20a, 20b).

5. Procédé selon la revendication 2, **caractérisé en ce que** la limite de puissance (P_{max,a}, P_{max,b}) du convertisseur correspondant (9a, 9b) est déterminée en fonction des valeurs de courant et/ou de tension maximales autorisées du convertisseur (9a, 9b).

6. Procédé selon la revendication 2 ou 5, **caractérisé en ce que,** en cas de valeurs connues de la limite de puissance (P_{max,a}, P_{max,b}) du convertisseur (9a, 9b), de la source d'énergie régénérative (3a, 3b) associée au convertisseur (9a, 9b) et/ou de la consommation maximale admissible (P_{max,Last}) de la charge (6), la puissance à consommer par la charge (6) est adaptée de telle sorte que
- la puissance (Pₐ, P_{b}) s'écoulant par l'intermédiaire de l'au moins un convertisseur (9a, 9b) est inférieure à la limite de puissance (P_{max,a}, P_{max,b}) du convertisseur correspondant (9a, 9b) et/ou de la source d'énergie régénérative (3a, 3b) affectée au convertisseur (9a, 9b) d'au moins une valeur de tolérance prédéterminée, ou
- une consommation (P_{Last}) de la charge (6) est inférieure à la consommation maximale admissible (P_{max,}Last) de la charge (6) d'au moins une valeur de tolérance prédéterminée.

7. Procédé selon l'une quelconque des revendications 1 à 6, **caractérisé en ce que** la variation de la caractéristique fréquence-puissance (20a, 20b) comprend un décalage parallèle d'au moins une partie de la caractéristique fréquence-puissance (20a, 20b) dans la direction de l'axe des fréquences.

8. Procédé selon l'une quelconque des revendications 1 à 7, **caractérisé en ce que** la caractéristique fréquence-puissance (20a, 20b) est décrite au moins dans une section par une ligne droite, la variation de la caractéristique fréquence-puissance (20a, 20b) présentant une variation d'une pente de ligne droite (αₐ, α_{b}) dans la section concernée.

9. Procédé selon l'une quelconque des revendications précédentes, **caractérisé en ce que** le au moins un convertisseur de réglage de tension (9a, 9b) comprend un groupe comprenant une pluralité de convertisseurs de réglage de tension (9a, 9b) destinés chacun à convertir la puissance de sources d'énergie régénératives connectées (3a, 3b) en courant alternatif selon une caractéristique fréquence-puissance (20a, 20b), et dans lequel la caractéristique fréquence-puissance (20a, 20b) est modifiée en fonction de la puissance disponible de la source de courant (3a, 3b) associée au convertisseur (9a, 9b) pour chacun des convertisseurs (9a, 9b).

10. Réseau en site isolé (1) comprenant
- au moins un convertisseur de réglage de tension (9a, 9b) qui présente un convertisseur CC/CA (8a, 8b) et dont l'entrée est reliée à une source d'énergie régénérative (3a, 3b) du réseau en site isolé (1) et dont la sortie est reliée à une ligne CA (7) du réseau en site isolé (1),
- le convertisseur (9a, 9b) étant conçu pour régler une tension alternative dans le réseau en site isolé (1) en fonction d'une caractéristique fréquence-puissance (20a, 20b) associée au convertisseur (9a, 9b),
- une charge (6) dont la consommation électrique est fonction d'une amplitude de tension (Û0) de la tension alternative dans le réseau en site isolé (1),
- une unité de commande (11) pour commander au moins un convertisseur de réglage de tension (9a, 9b), qui est conçue pour transmettre à l'au moins un convertisseur de réglage de tension (9a, 9b) une valeur prédéfinie de l'amplitude de tension (Û0) pour la tension alternative du réseau en site isolé (1), et
- une unité de détection (18) connectée à l'unité de commande (11) pour déterminer une fréquence (f2) de la tension alternative dans le réseau en site isolé (1),
- dans lequel l'unité de commande (11) en liaison avec le au moins un convertisseur (9a, 9b) et la source d'énergie régénérative (3a, 3b) connectée au convertisseur (9a, 9b) est adaptée pour passer par les étapes de procédé suivantes d'une manière répétée afin de suivre un changement dans le temps d'une puissance disponible maximale de la source d'énergie régénérative (3a, 3b) :
- modification de la caractéristique fréquence-puissance (20a, 20b) de l'au moins un onduleur (9a, 9b) en fonction d'une puissance disponible de la source d'énergie régénérative (3a, 3b),
- la caractéristique fréquence-puissance (20a, 20b) étant modifiée au moins en partie vers une fréquence plus élevée pour une puissance donnée afin de vérifier si la puissance disponible de la source d'énergie régénérative (3a, 3b) est supérieure à la puissance actuelle, et
- la caractéristique fréquence-puissance (20a, 20b) étant modifiée au moins en partie à une fréquence inférieure pour la puissance donnée si la source d'énergie régénérative (3a, 3b) ne peut pas fournir la puissance affectée à la fréquence actuelle selon la caractéristique fréquence-puissance (20a, 20b),
- détermination d'une fréquence (f2) de la tension alternative dans le réseau en site isolé (1) par la unité de détection (18) connectée à l'unité de commande (11) en conséquence de la variation de la caractéristique fréquence-puissance (20a, 20b) par l'unité de commande (11), et
- redétermination d'une valeur prédéfinie de l'amplitude de tension (Û0) et transmission de la valeur prédéfinie redéterminée à l'au moins un convertisseur de réglage de tension (9a, 9b) par l'unité de commande (11), la valeur prédéfinie étant augmentée, pour augmenter la consommation d'énergie de la charge (6) lorsque la fréquence déterminée (f2) est supérieure à une fréquence nominale (fₙₒₘ), et la valeur prédéfinie étant diminuée pour diminuer la consommation d'énergie de la charge (6) lorsque la fréquence déterminée (f2) est inférieure à la fréquence nominale (fₙₒₘ).

11. Réseau en site isolé (1) selon la revendication 10, **caractérisé en ce que** le au moins un convertisseur de réglage de tension (9a, 9b) comprend un groupe avec une pluralité de convertisseurs de réglage de tension (9a, 9b), dans lequel au moins un convertisseur (9a, 9b) du groupe en connexion avec la source d'énergie régénérative (2a, 2b) connectée au convertisseur (9a, 9b) est conçu comme un système photovoltaïque (PV), ou un système d'énergie éolienne.

12. Réseau en site isolé (1) selon la revendication 10 ou 11, **caractérisé en ce que** le réseau en site isolé (1) présente une ligne de transmission haute tension avec une ligne haute tension (17) qui est reliée à la ligne CA (7) du réseau en site isolé (1) via un transformateur (19).

13. Réseau en site isolé (1) selon l'une quelconque des revendications 10 à 12, **caractérisé en ce que** la charge (6) est conçue comme une charge à courant continu (14), notamment comme un électrolyseur, qui est reliée à la ligne à courant alternatif (7) du réseau en site isolé (1) par l'intermédiaire d'un convertisseur alternatif/continu (4).

14. Réseau en site isolé (1) selon l'une quelconque des revendications 10 à 13, **caractérisé en ce que** le réseau en site isolé (1) comporte une unité de stockage (15) qui est connectée à la ligne de courant alternatif (7) du réseau en site isolé (1) par l'intermédiaire d'une unité de stockage à courant bidirectionnel (16).
